# EUROPEAN PATENT APPLICATION

(11) **EP 4 708 075 A1**
(43) Date of publication of application: **11.03.2026**
(21) Application number: 24818287.5
(22) Date of filing: 28.02.2024
(51) Int. Cl.: G06F 16/41, G06F 16/48

(54) **METADATA GENERATION METHOD, RECOGNITION METHOD, AND ELECTRONIC DEVICE**

(30) Priority: 08.06.2023 CN 202310675278
(71) Applicant: Huawei Technologies Co., Ltd., Shenzhen, Guangdong 518129 (CN)
(72) Inventor: KANG, Xin, Shenzhen, Guangdong 518129 (CN); HU, Ziyuan, Shenzhen, Guangdong 518129 (CN); ZHOU, Haibo, Shenzhen, Guangdong 518129 (CN); CHU, Cheng Kang, Shenzhen, Guangdong 518129 (CN); LI, Tieyan, Shenzhen, Guangdong 518129 (CN)
(74) Representative: Huawei European IPR
(86) International application number: PCT/CN2024/079079
(87) International publication number: WO 2024/250750

(57) **Abstract**

Embodiments of this application provide a metadata generation method, a recognition method, and an electronic device. The method includes: first, obtaining media content; and then, generating metadata of the media content, where the metadata of the media content includes an artificial intelligence generated content AIGC identifier, and the AIGC identifier indicates whether the media content is AIGC. Further, subsequently, whether the media content is the AIGC can be recognized based on the AIGC identifier in the metadata of the media content. In this way, it can help a user determine authenticity of the media content to some extent, and improve vigilance of the user in using (for example, forwarding) the media content to some extent.

## Description

This application claims priority to Chinese Patent Application No. 202310675278.8, filed with the China National Intellectual Property Administration on June 8, 2023 and entitled "METADATA GENERATION METHOD, RECOGNITION METHOD, AND ELECTRONIC DEVICE", which is incorporated herein by reference in its entirety.

### TECHNICAL FIELD

Embodiments of this application relate to the data processing field, and in particular, to a metadata generation method, a recognition method, and an electronic device.

### BACKGROUND

With the development of artificial intelligence (Artificial Intelligence, AI) technologies, AI generated content (Artificial Intelligence Generated Content, AIGC) is developing explosively. The AIGC can create novel, interesting, and diversified digital content (such as images, music, and natural languages), and meet different user preferences and scenarios.

However, AI generation may affect authenticity, credibility, and the like of information. For example, the AIGC may be used to spread false information. Therefore, it is important to recognize the AIGC.

### SUMMARY

To help a user recognize whether media content is AIGC, this application provides a metadata generation method, a recognition method, and an electronic device. Metadata generated by using the generation method may include an AIGC identifier indicating whether the media content is the AIGC, and subsequently, whether the media content is the AIGC can be recognized based on the AIGC identifier in the metadata of the media content. In this way, it can help the user determine authenticity of the media content to some extent, and improve vigilance of the user in using (for example, forwarding) the media content to some extent.

According to a first aspect, an embodiment of this application provides a metadata generation method. The method includes: first, obtaining media content; and then, generating metadata of the media content, where the metadata of the media content includes an artificial intelligence generated content AIGC identifier, and the AIGC identifier indicates whether the media content is AIGC. Further, subsequently, the AIGC identifier may be obtained from the metadata of the media content, and whether the media content is the AIGC is recognized based on the AIGC identifier. In this way, it can help a user determine authenticity of the media content to some extent (for example, when it is determined that the media content is the AIGC, it can be determined that there is a high probability that information included in the media content is false, and subsequently, the authenticity of the media content may be further determined in another manner), and improve vigilance of the user in using (for example, forwarding) the media content to some extent (for example, when it is determined that the media content is the AIGC, the user may further verify whether the media content has copyright, determine whether the media content includes personal information, verify whether the media content includes false information, and the like; and when it is determined that the media content has the copyright, or the media content includes the personal information, or the media content includes the false information, the media content may not be used; or when it is determined through verification that the media content does not have the copyright, the media content does not include personal information, and the media content does not include the false information, the media content may be used.)

For example, the media content includes but is not limited to: an image, a picture, a video, an audio, and the like. This is not limited in this application.

For example, the metadata of the media content may include data used to describe the media content. For example, the metadata may include information that describes a property (property) of the media content.

It should be noted that, the metadata generation method in this application is applied to a media asset creation (creation) phase, and corresponds to a metadata generation process in the media asset creation phase.

For example, when the media content is the AIGC, a value of the AIGC identifier in the metadata of the media content is a preset identifier value, and the preset identifier value indicates that the media content is the AIGC. When the media content is not the AIGC, a value of the AIGC identifier in the metadata of the media content is another identifier value, and the another identifier value indicates that the media content is not the AIGC. It should be understood that the preset identifier value is different from the another identifier value. For the AIGC identifier, one preset identifier value and one or more other identifier values may be predefined.

According to the first aspect, the metadata of the media content further includes a first hash value, where the first hash value is a hash value of data that includes the AIGC identifier. This can prevent the AIGC identifier from being tampered with.

For example, the first hash value is the hash value of data that includes the AIGC identifier. It may be understood as that the first hash value is a hash value of some data, where the "some data" may include the AIGC identifier.

For example, when the "some data" includes only the AIGC identifier, the first hash value may be a hash value of the AIGC identifier, or the first hash value is obtained by performing hash calculation on the AIGC identifier. Specifically, hash calculation may be performed on the value of the AIGC identifier according to a hash algorithm, to obtain the first hash value. It should be understood that the hash algorithm used to calculate the first hash value is not limited in this application.

It should be understood that the first hash value is optional information in the metadata of the media content.

According to any one of the first aspect or the foregoing implementations of the first aspect, the metadata of the media content further includes a digital signature of the first hash value. This can prevent the AIGC identifier from being forged.

For example, the digital signature may be performed on the first hash value according to a digital signature algorithm by using a private key, to obtain the digital signature of the first hash value. It should be understood that the digital signature algorithm used to calculate the digital signature of the first hash value is not limited in this application.

It should be understood that the digital signature of the first hash value is optional information in the metadata of the media content.

According to any one of the first aspect or the foregoing implementations of the first aspect, the metadata of the media content further includes a training enabling identifier, and the training enabling identifier indicates whether the media content is allowed to be used for model training. In this way, it is convenient to subsequently determine whether the media content can be used to perform AI model training.

For example, the training enabling identifier may be a DNT (full name: Do not Train) field.

It should be understood that the training enabling identifier is optional information in the metadata of the media content.

According to any one of the first aspect or the foregoing implementations of the first aspect, the metadata of the media content further includes related information of the media content.

For example, the related information of the media content may be information related to the media content, and the related information of the media content may include data used to describe the media content, for example, may include information that describes a property of the media content.

According to any one of the first aspect or the foregoing implementations of the first aspect, the metadata of the media content further includes at least one of the following: a model identifier, a model version identifier, a model parameter data amount identifier, or a model training set data amount identifier.

For example, the model identifier may indicate a type of an AI model for generating the media content, for example, ChatGPT (a driven natural language processing tool) or Midjourney (an AI drawing tool).

For example, the model version identifier may indicate a version of an AI model for generating the media content, for example, Midjourney V4, Midjourney V5, ChatGPT v3.5, or ChatGPT v4.

For example, the model parameter data amount identifier may indicate a data amount of parameters of an AI model for generating the media content, for example, 1 million parameters or 10 million parameters.

For example, the model training set data amount identifier may indicate a data amount of a training set of an AI model for generating the media content, for example, 1 G or 47 T.

In this way, it is convenient to subsequently learn of, based on the metadata of the media content, the related information of the AI model for generating the media content.

It should be understood that the model identifier, the model version identifier, the model parameter data amount identifier, and the model training set data amount identifier are all optional information in the metadata of the media content.

According to any one of the first aspect or the foregoing implementations of the first aspect, the metadata of the media content further includes: a second hash value, a third hash value, and a digital signature of the third hash value, where the second hash value is a hash value of the media content, and the third hash value is a hash value of data that includes the related information of the media content and the second hash value. This can prevent the media content and the related information of the media content from being tampered with, and prevent the related information of the media content from being forged.

For example, the third hash value is the hash value of data that includes the related information of the media content and the second hash value. It may be understood as that the third hash value is a hash value of some data, where the "some data" may include the related information of the media content and the second hash value.

For example, when the "some data" includes only the related information of the media content and the second hash value, the third hash value may be obtained by performing hash calculation on the related information of the media content and the second hash value. Specifically, hash calculation may be performed on combined related information of the media content and second hash value, to obtain the third hash value.

It should be understood that the second hash value, the third hash value, and the digital signature of the third hash value are all optional information in the metadata of the media content.

According to any one of the first aspect or the foregoing implementations of the first aspect, the metadata of the media content further includes one or more media declarations and one or more fourth hash values, where the media declaration is a declaration for the media content, and the fourth hash value is a hash value of the media declaration.

For example, the media declaration may include but is not limited to: copyright information, a thumbnail, whether the media declaration can be modified, operation permission, usage permission, a source of the media content, editing information, and the like.

It should be understood that the media declaration and the fourth hash value are optional information in the metadata. In other words, in a process of generating the metadata, the media content may be declared, or the media content may not be declared. In this way, flexibility and backward compatibility of the metadata may be improved.

According to any one of the first aspect or the foregoing implementations of the first aspect, the metadata of the media content further includes a fifth hash value, where the fifth hash value is a hash value of data that includes the second hash value, the third hash value, the digital signature of the third hash value, and the one or more fourth hash values. In this way, a plurality of hash values may be associated, thereby further preventing the media content and the related information of the media content from being tampered with.

For example, the fifth hash value is the hash value of data that includes the second hash value, the third hash value, the digital signature of the third hash value, and the one or more fourth hash values. It may be understood as that the fifth hash value is a hash value of some data, where the "some data" may include the second hash value, the third hash value, the digital signature of the third hash value, and the one or more fourth hash values.

For example, when the "some data" includes only the second hash value, the third hash value, the digital signature of the third hash value, and the one or more fourth hash values, the fifth hash value may be obtained by performing hash calculation on the second hash value, the third hash value, the digital signature of the third hash value, and the one or more fourth hash values.

For example, hash calculation may be performed on a combined result obtained by combining one or more of the second hash value, the third hash value, the digital signature of the third hash value, and the one or more fourth hash values, to obtain an intermediate hash value. When the intermediate hash value is obtained by performing hash calculation by combining all of the second hash value, the third hash value, the digital signature of the third hash value, and the fourth hash value, the intermediate hash value may be used as the fifth hash value. When the intermediate hash value is obtained by performing hash calculation by combining a part of the second hash value, the third hash value, the digital signature of the third hash value, and the one or more fourth hash values, hash calculation may be performed based on the intermediate hash value and the other part of the second hash value, the third hash value, the digital signature of the third hash value, and the one or more fourth hash values, to obtain the fifth hash value.

For example, the metadata of the media content may further include a digital signature of the fifth hash value. It should be understood that the metadata of the media content may further include other information. This is not limited in this application.

According to any one of the first aspect or the foregoing implementations of the first aspect, the method further includes: obtaining, based on the media content and the metadata of the media content, a media asset corresponding to the media content.

For example, the media content and the metadata of the media content may be encapsulated to obtain the media asset corresponding to the media content. For example, the media content is a JPEG (Joint Picture Encoding Group, Joint Picture Encoding Group) image, and a JPEG file (that is, a media asset) may be obtained by encapsulating the image and metadata of the image.

According to any one of the first aspect or the foregoing implementations of the first aspect, the metadata of the media content is a JUMBF (JPEG Universal Metadata Box Format, JPEG Universal Metadata Box Format) box, the JUMBF box includes a JUMBF description box and a JUMBF content box, and the JUMBF description box and/or the JUMBF content box include/includes the AIGC identifier. In this way, whether the media content is the AIGC can be recognized based on the AIGC identifier read from the JUMBF description box and/or the JUMBF content box.

For example, the JUMBF description box is a JUMBF description box, and the JUMBF content box is a JUMBF content box.

For example, a new content type (Content Type) may be defined in the JUMBF, and may be referred to as an AIGC content type, and a corresponding JUMBF content box may be referred to as an AICG content box. In addition, for a type field in the JUMBF description box, a new identifier value (which may be referred to as a preset identifier value) may be defined. The preset identifier value may indicate that the JUMBF content box is an AICG content box (or indicate that a type of the JUMBF content box is an AIGC content type, or may be understood as indicating that the media content is the AIGC). In this case, the AIGC identifier may be the type field in the JUMBF description box.

For example, in this application, an AIGCI (AIGC Identify) field may be added to the JUMBF description box. The AIGCI field may indicate whether the media content is the AIGC. The AIGCI field in the JUMBF description box may be used as the AIGC identifier. For example, a plurality of identifier values (which may include one preset identifier value and at least one other identifier value) may be defined for the AIGCI field. For example, two identifier values "1" and "0" are defined. "1" may be a preset identifier value, indicating that the media content is the AIGC, and "0" may be another identifier value, indicating that the media content is not the AIGC.

For example, an AIGCI field may be added to the JUMBF content box. The AIGCI field may indicate whether the media content is the AIGC. The AIGCI field in the JUMBF content box may be used as the AIGC identifier.

For example, the JUMBF description box may further include a training enabling identifier.

According to any one of the first aspect or the foregoing implementations of the first aspect, the JUMBF content box further includes the related information of the media content.

According to any one of the first aspect or the foregoing implementations of the first aspect, the JUMBF content box further includes at least one of the following: the model identifier, the model version identifier, the model parameter data amount identifier, or the model training set data amount identifier.

When the media content is the AIGC, the JUMBF content box may be referred to as the AICG content box.

For example, the AICG content box may include but is not limited to: the AIGCI field, an AI model (AI model) field, an AI model ver (full name: AI Model Version, AI model version) field, a para size (full name: Parameter Size, AI model parameter data amount) field, a data size (AI model training set data amount) field, and a data (load data) field.

For example, the AIGCI field (which may also be referred to as the AIGC identifier, where the AIGC identifier represented by the type field in the JUMBF description box and the AIGC identifier represented by the AIGCI field in the AICG content box are two identifiers, but the two identifiers have a same function) may indicate whether the JUMBF content box is the AICG content box (which may also be understood as indicating whether the media content is the AIGC). For example, two identifier values are defined for the AIGCI field: "1" and "0". "1" indicates that the JUMBF content box is the AICG content box, and "0" indicates that the JUMBF content box is not the AICG content box.

For example, the AI model field may also be referred to as a model identifier.

For example, the AI model ver field may also be referred to as a model version identifier.

For example, the para size field may also be referred to as a model parameter data amount identifier.

For example, the data size field may also be referred to as a model training set data amount identifier.

For example, the data field may be used to store the related information of the media content.

For example, the JUMBF content box further includes the second hash value, the third hash value, and the digital signature of the third hash value.

For example, the JUMBF content box further includes the one or more media declarations and the one or more fourth hash values.

For example, the JUMBF content box further includes the fifth hash value.

For example, the JUMBF content box further includes the training enabling identifier.

It should be understood that the training enabling identifier is optional information in the metadata of the media content. Whether the training enabling identifier is located in the JUMBF content box or the JUMBF description box is not limited in this application.

According to any one of the first aspect or the foregoing implementations of the first aspect, the related information of the media content includes at least one of the following: generation time of the media content, an author name of the media content, a digital content identifier of the media content, a generation place of the media content, information about a media content generation device of the media content, resolution of the media content, or a size of the media content.

It should be understood that the related information of the media content may further include other information such as a media type of the media content or a manner of generating the media content. This is not limited in this application.

For example, the media type may include but is not limited to: an image type, a video type, an audio type, a graphic type, a text type, and the like.

For example, the manner of generating the media content may include an AI generation manner and a non-AI generation manner. For example, if the media content is an image, a corresponding generation manner may include but is not limited to: a photographing generation manner, a screenshot generation manner, and an AI generation manner. The photographing generation manner and the screenshot generation manner are non-AI generation manners.

In this way, in addition to recognizing whether the media content is the AIGC based on the AIGC identifier read from the JUMBF description box or the JUMBF content box, whether the media content is the AIGC may also be recognized based on the manner of generating the media content read from the data field in the JUMBF content box.

According to any one of the first aspect or the foregoing implementations of the first aspect, the JUMBF description box further includes the first hash value, an enabling state identifier, a content request identifier, an identity, and a sixth hash value; and the sixth hash value is determined based on the JUMBF content box, and the first hash value is a hash value of data that includes the AIGC identifier, the enabling state identifier, the content request identifier, the identity, and the sixth hash value. In other words, hash calculation may be performed on field values of fields in the JUMBF description box, to obtain the first hash value. This can prevent a field value of any field in the JUMBF description box from being tampered with.

For example, the first hash value is the hash value of data that includes the AIGC identifier, the enabling state identifier, the content request identifier, the identity, and the sixth hash value. It may be understood that the first hash is a hash value of some data, where the "some data" may include the AIGC identifier, the enabling state identifier, the content request identifier, the identity, and the sixth hash value.

For example, when the "some data" includes only the hash value of data of the AIGC identifier, the enabling state identifier, the content request identifier, the identity, and the sixth hash value, the first hash value may be obtained by performing hash calculation on the AIGC identifier, the enabling state identifier, the content request identifier, the identity, and the sixth hash value.

For example, hash calculation may be performed on a combined result obtained by combining one or more of a value of the AIGC identifier, a value of the enabling state identifier, a value of the content request identifier, a value of the identity, and the sixth hash value, to obtain an intermediate hash value. When the intermediate hash value is obtained by performing hash calculation by combining all of the value of the AIGC identifier, the value of the enabling state identifier, the value of the content request identifier, the value of the identity, and the sixth hash value, the intermediate hash value may be used as the first hash value. When the intermediate hash value is obtained by performing hash calculation by combining a part of the value of the AIGC identifier, the value of the enabling state identifier, the value of the content request identifier, the value of the identity, and the sixth hash value, hash calculation may be performed based on the intermediate hash value and the other part of the value of the AIGC identifier, the value of the enabling state identifier, the value of the content request identifier, the value of the identity, and the sixth hash value, to obtain the first hash value.

For example, the JUMBF description box may include a plurality of fields: a type field (a type field), a toggles (T) field (an enabling status field), a label field (a content request field), an ID field (an identity field), and an SHA256HASH field (a field used to store the sixth hash value).

For example, the type field (which may be referred to as a JUMBF type field, or may be referred to as a type identifier) may be used to describe a JUMBF content type (JUMBF Content Type) (that is, a type of the JUMBF content box).

For example, the type field may include one 16-byte UUID, and a value of the UUID specifies the type of the JUMBF content box.

For example, the type of the JUMBF content box may include but is not limited to: a codestream content type (image codestream content type), a UUID content type ((Universally unique identifier, universally unique identifier) content type), an XML content type ((eXtensible Markup Language, extensible markup language) content type), a JSON content type ((JavaScript Object Notation, JSON, JavaScript object notation) content type), a CBOR content type ((Concise Binary Object Representation, concise binary object notation) content type), an embedded file content type (embedded file content type), and another content type (which can be customized).

For example, the type field is a mandatory field.

For example, the toggles (T) field (which may also be referred to as the enabling state identifier) may include a binary number of 1 byte (that is, 8 bits), and may indicate a value of an option related to a JUMBF box. Each bit indicates one option. When a value of the bit is 1, it indicates that the option is enabled. When a value of the bit is 0, it indicates that the option is disabled.

For example, the label field (which may also be referred to as the content request identifier) may include a text label of a variable length, and may be used to reference or request content of the JUMBF box.

For example, the ID field (which may also be referred to as the identity) may include one unique 4-byte ID allocated by a user, and may be used to reference a JUMBF box in binary.

For example, the SHA256HASH field may be used to store the sixth hash value, and the sixth hash value is determined based on n JUMBF content boxes. For example, hash calculation may be performed on the n JUMBF content boxes after the n JUMBF content boxes are combined in a sequence of the n JUMBF content boxes in a JUMBF super box, to obtain the sixth hash value.

For example, the toggles (T) field, the label field, the ID field, and the SHA256HASH field may be optional fields.

For example, calculation may be performed, according to a hash algorithm, on a combined result obtained by combining the identifier value of the AIGC identifier and a field value of at least one of the toggles (T) field, the label field, the ID field, the SHA256HASH field, and the DNT field, to obtain the first hash value.

For example, the JUMBF description box may further include the digital signature of the first hash value.

According to a second aspect, an embodiment of this application provides a recognition method. The method includes: first, obtaining metadata of media content; then, reading an artificial intelligence generated content AIGC identifier from the metadata of the media content; and then, determining, based on the AIGC identifier, whether the media content is AIGC.

According to the second aspect, the method further includes: when a value of the AIGC identifier is a preset identifier value, determining that the media content is the AIGC.

According to any one of the second aspect or the foregoing implementations of the second aspect, the metadata of the media content is a JPEG universal metadata box format JUMBF box, the JUMBF box includes a JUMBF description box and a JUMBF content box, and the JUMBF description box and/or the JUMBF content box include/includes the AIGC identifier.

According to a third aspect, an embodiment of this application provides a metadata generation apparatus. The apparatus includes: a content obtaining module, configured to obtain media content; and a metadata generation module, configured to generate metadata of the media content, where the metadata of the media content includes an artificial intelligence generated content AIGC identifier, and the AIGC identifier indicates whether the media content is AIGC.

It should be understood that the metadata generation apparatus in the third aspect may perform the steps in any one of the first aspect and the implementations of the first aspect. Details are not described herein again.

Any one of the third aspect and the implementations of the third aspect corresponds to any one of the first aspect and the implementations of the first aspect. For technical effect corresponding to any one of the third aspect and the implementations of the third aspect, refer to the technical effect corresponding to any one of the first aspect and the implementations of the first aspect. Details are not described herein again.

According to a fourth aspect, an embodiment of this application provides a recognition apparatus. The apparatus includes: a metadata obtaining module, configured to obtain metadata of media content; a reading module, configured to read an artificial intelligence generated content AIGC identifier from the metadata of the media content; and a determining module, configured to determine, based on the AIGC identifier, whether the media content is AIGC.

It should be understood that the recognition apparatus in the fourth aspect may perform the steps in any one of the second aspect and the implementations of the second aspect. Details are not described herein again.

Any one of the fourth aspect and the implementations of the fourth aspect corresponds to any one of the second aspect and the implementations of the second aspect. For technical effect corresponding to any one of the fourth aspect and the implementations of the fourth aspect, refer to the technical effect corresponding to any one of the second aspect and the implementations of the second aspect. Details are not described herein again.

According to a fifth aspect, an embodiment of this application provides an electronic device, including a memory and a processor. The memory is coupled to the processor. The memory stores program instructions. When the program instructions are executed by the processor, the electronic device is enabled to perform the metadata generation method in any one of the first aspect or the possible implementations of the first aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to the technical effect corresponding to any one of the first aspect and the implementations of the first aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the recognition method in any one of the second aspect or the possible implementations of the second aspect.

Any one of the sixth aspect and the implementations of the sixth aspect corresponds to any one of the second aspect and the implementations of the second aspect. For technical effect corresponding to any one of the sixth aspect and the implementations of the sixth aspect, refer to the technical effect corresponding to any one of the second aspect and the implementations of the second aspect. Details are not described herein again.

According to a seventh aspect, an embodiment of this application provides a chip, including one or more interface circuits and one or more processors. The interface circuit is configured to: receive a signal from a memory of an electronic device, and send the signal to the processor. The signal includes computer instructions stored in the memory. When the processor executes the computer instructions, the steps in any one of the first aspect or the possible implementations of the first aspect are performed.

Any one of the seventh aspect and the implementations of the seventh aspect corresponds to any one of the first aspect and the implementations of the first aspect. For technical effect corresponding to any one of the seventh aspect and the implementations of the seventh aspect, refer to the technical effect corresponding to any one of the first aspect and the implementations of the first aspect. Details are not described herein again.

According to an eighth aspect, an embodiment of this application provides a chip, including one or more interface circuits and one or more processors. The one or more processors receive or send data via the one or more interface circuits. When the one or more processors execute computer instructions, the steps in any one of the second aspect or the possible implementations of the second aspect are performed.

Any one of the eighth aspect and the implementations of the eighth aspect corresponds to any one of the second aspect and the implementations of the second aspect. For technical effect corresponding to any one of the eighth aspect and the implementations of the eighth aspect, refer to the technical effect corresponding to any one of the second aspect and the implementations of the second aspect. Details are not described herein again.

According to a ninth aspect, an embodiment of this application provides a computer-readable storage medium. The computer-readable storage medium stores a computer program. When the computer program is run on a computer or a processor, the computer or the processor is enabled to perform the metadata generation method in any one of the first aspect or the possible implementations of the first aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to the technical effect corresponding to any one of the first aspect and the implementations of the first aspect. Details are not described herein again.

According to a tenth aspect, an embodiment of this application provides a computer-readable storage medium. The computer-readable storage medium stores a computer program. When the computer program is run on a computer or a processor, the computer or the processor is enabled to perform the recognition method in any one of the second aspect or the possible implementations of the second aspect.

Any one of the tenth aspect and the implementations of the tenth aspect corresponds to any one of the second aspect and the implementations of the second aspect. For technical effect corresponding to any one of the tenth aspect and the implementations of the tenth aspect, refer to the technical effect corresponding to any one of the second aspect and the implementations of the second aspect. Details are not described herein again.

According to an eleventh aspect, an embodiment of this application provides a computer program product. The computer program product includes computer instructions. When the computer instructions are executed by a computer or a processor, the computer or the processor is enabled to perform the metadata generation method in any one of the first aspect or the possible implementations of the first aspect.

Any one of the eleventh aspect and the implementations of the eleventh aspect corresponds to any one of the first aspect and the implementations of the first aspect. For technical effect corresponding to any one of the eleventh aspect and the implementations of the eleventh aspect, refer to the technical effect corresponding to any one of the first aspect and the implementations of the first aspect. Details are not described herein again.

According to a twelfth aspect, an embodiment of this application provides a computer program product. The computer program product includes computer instructions. When the computer instructions are executed by a computer or a processor, the computer or the processor is enabled to perform the recognition method in any one of the second aspect or the possible implementations of the second aspect.

Any one of the twelfth aspect and the implementations of the twelfth aspect corresponds to any one of the second aspect and the implementations of the second aspect. For technical effect corresponding to any one of the twelfth aspect and the implementations of the twelfth aspect, refer to the technical effect corresponding to any one of the second aspect and the implementations of the second aspect. Details are not described herein again.

### BRIEF DESCRIPTION OF DRAWINGS

FIG. 1a is a diagram of an example of an application scenario;
FIG. 1b is a diagram of an example of an application scenario;
FIG. 1c(1), FIG. 1c(2), and FIG. 1c(3) are a diagram of an example of a recognition method;
FIG. 2 is a diagram of an example of a metadata generation process;
FIG. 3a is a diagram of an example of a structure of a JUMBF box;
FIG. 3b is a diagram of an example of a structure of a JUMBF description box;
FIG. 3c is a diagram of an example of a structure of an AICG content box;
FIG. 4a is a diagram of an example of a metadata generation process;
FIG. 4b is a diagram of an example of a structure of a JUMBF box;
FIG. 5a is a diagram of an example of a structure of a JUMBF description box;
FIG. 5b is a diagram of an example of a metadata generation process;
FIG. 5c is a diagram of an example of a structure of a JUMBF content box;
FIG. 5d is a diagram of an example of a structure of a JUMBF box;
FIG. 6a is a diagram of an example of a structure of a JUMBF content box;
FIG. 6b is a diagram of an example of a metadata generation process;
FIG. 6c is a diagram of an example of a structure of a JUMBF box;
FIG. 7a is a diagram of an example of a structure of a JUMBF description box;
FIG. 7b is a diagram of an example of a structure of an AIGC content box;
FIG. 7c is a diagram of an example of a structure of a JUMBF description box;
FIG. 7d is a diagram of an example of a structure of a JUMBF description box;
FIG. 7e is a diagram of an example of a structure of a data field in a JUMBF content box;
FIG. 7f is a diagram of an example of a fifth hash value generation process;
FIG. 7g is a diagram of an example of a fifth hash value generation process;
FIG. 8 is a diagram of an example of a recognition process;
FIG. 9 is a diagram of an example of a recognition process;
FIG. 10 is a diagram of an example of a recognition process;
FIG. 11 is a diagram of an example of a recognition process;
FIG. 12 is a diagram of an example of a metadata generation apparatus;
FIG. 13 is a diagram of an example of a recognition apparatus; and
FIG. 14 is a diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are a part but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

In descriptions of embodiments of this application, "a plurality of" means two or more, unless otherwise specified. For example, a plurality of processing units mean two or more processing units, and a plurality of systems mean two or more systems.

For ease of understanding, some terms mentioned in embodiments of this application are first described.

### 1. Media asset (Media Asset)

The media asset may include media content (Media Content) and metadata (Metadata) of the media content. The metadata of the media content is bound to the media content, or the metadata of the media content is associated with the media content.

It should be noted that, in some scenarios, the media asset is also referred to as a media file. For example, the media content is a JPEG (Joint Picture Encoding Group, Joint Picture Encoding Group) image, and a corresponding media asset may be referred to as a JPEG file.

### 2. Media content (Media Content)

The media content may also be referred to as digital content (Digital content). The digital content is content of different content types such as a text, an image, and sound that exist in a digital form. The digital content can be stored in a digital carrier, for example, an optical disc or a hard disk drive, and propagated over a network or in other means. The digital content is an overall product or service that integrates content such as an image, a text, an audio, and a video by using a digital technology, and is a product obtained by combining digital media technologies and cultural creativity.

A digital technology (Digital Technology) is a science and technology that coexists with electronic computers, and is a technology that uses specific devices to convert various information, including images, texts, sounds, and images, into binary digits "0" and "1" that can be identified by the electronic computers for computing, processing, storage, transmission, dissemination, and restoration. Because the computers are needed to encode, compress, and decode information in a calculation and storage process, the digital technology is also referred to as a digital technology, a computer digital technology, and the like. The digital technology is also referred to as a digital control technology.

### 3. Metadata (Metadata)

The metadata may include data used to describe media content. For example, the metadata may include information that describes a property (property) of the media content.

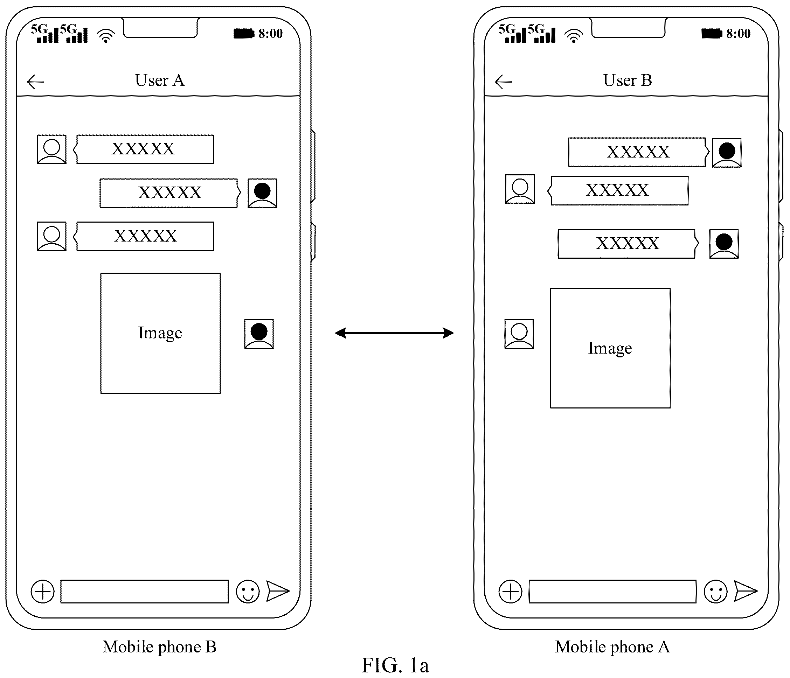

FIG. 1a is a diagram of an example of an application scenario. In FIG. 1a, media content is an image.

Refer to FIG. 1a. For example, after a mobile phone A of a user A receives an image sent by a mobile phone B of a user B, if the user A needs to use (for example, forward) the image, the user A may first determine whether the image is AIGC by using the mobile phone A; after determining that the image is the AIGC, the user A may further verify whether the media content has copyright, determine whether the media content includes personal information, and verify whether the media content includes false information, and the like; and then the user A determines whether to use the image.

It should be understood that the mobile phone A in FIG. 1a may also be another electronic device with a strong computing capability, for example, a personal computer, a computer workstation, or a tablet computer. This is not limited in this application.

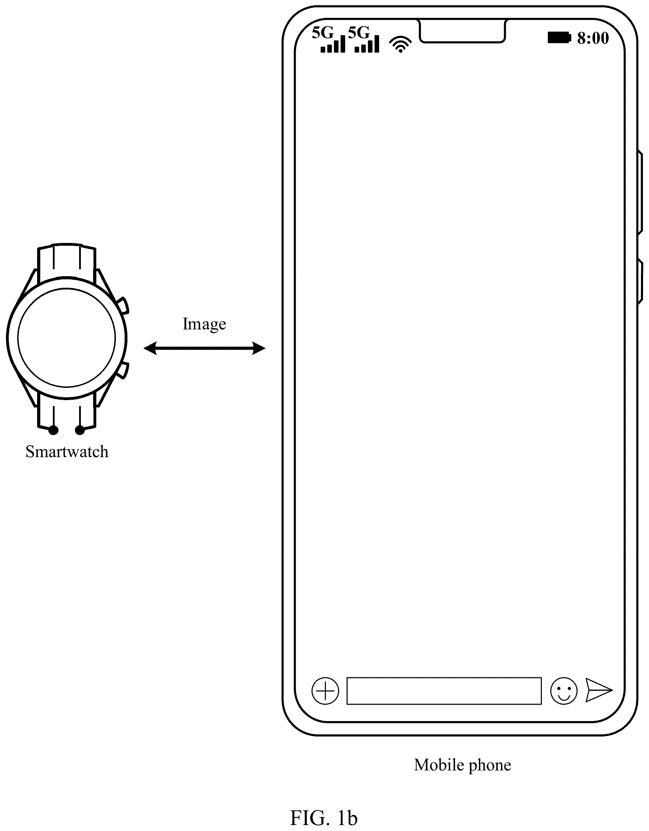

FIG. 1b is a diagram of an example of an application scenario. In FIG. 1b, media content is an image.

Refer to FIG. 1b. For example, when a user needs to determine whether an image in a smartwatch is AIGC, the user may send the image in the smartwatch to a mobile phone, and determine whether the image is the AIGC by using the mobile phone.

It should be understood that the smartwatch in FIG. 1b may also be another electronic device with a weak computing capability, for example, a media consumption device, a wearable device, a set-top box, or a game console. This is not limited in this application. The mobile phone in FIG. 1b may also be another electronic device with a strong computing capability, for example, a personal computer, a computer workstation, or a tablet computer. This is not limited in this application.

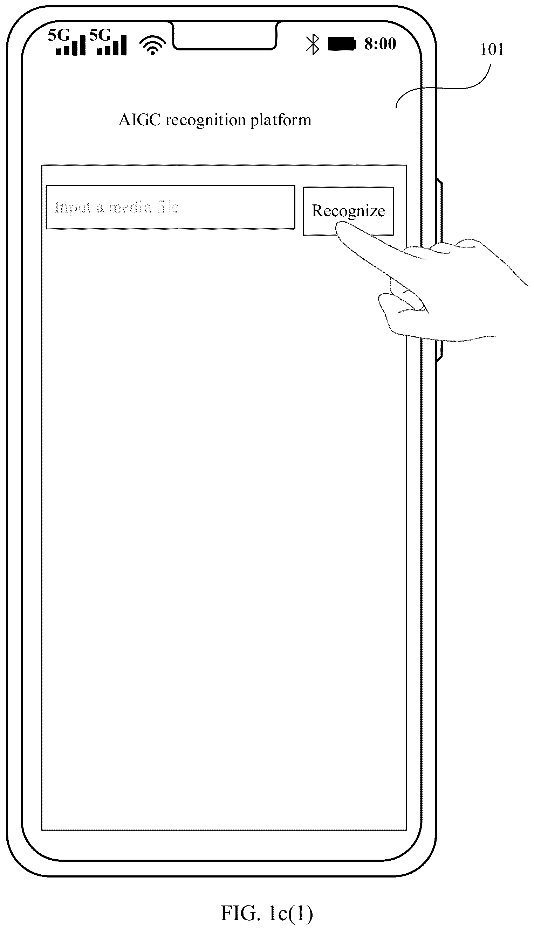

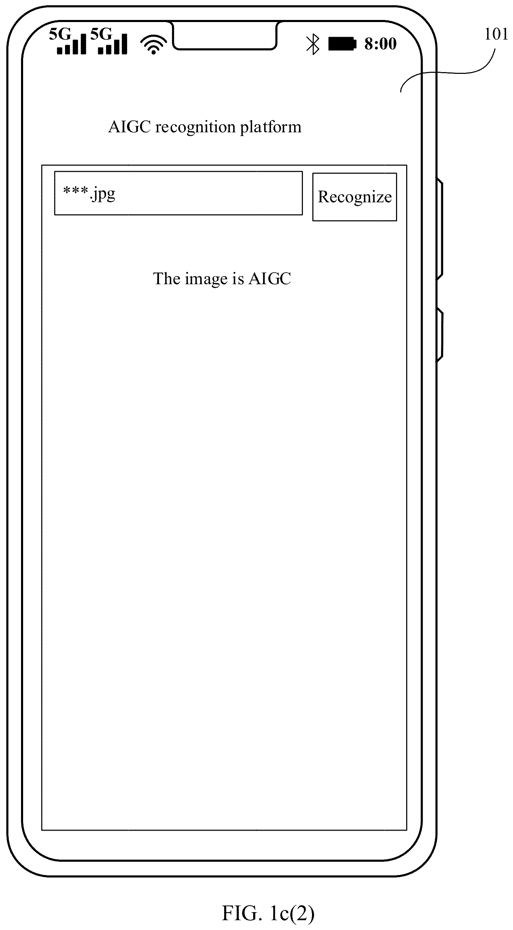

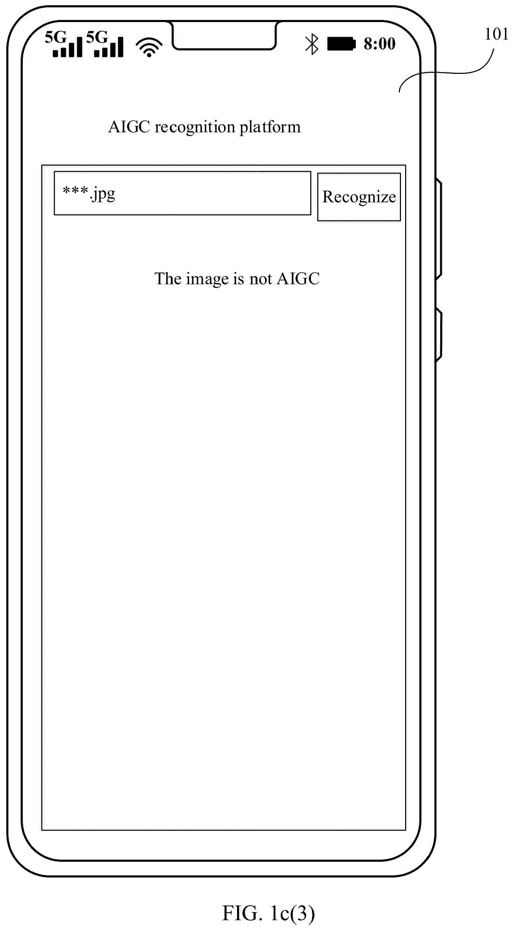

FIG. 1c(1), FIG. 1c(2), and FIG. 1c(3) are a diagram of an example of a recognition method. FIG. 1c(1), FIG. 1c(2), and FIG. 1c(3) show a process in which a mobile phone is used to determine whether an image is AIGC.

For example, a user may start a client (for example, an application program, an applet, or a web page) of an AIGC recognition platform in the mobile phone to perform AIGC recognition.

Refer to FIG. 1c(1). A main interface 101 of the client of the AIGC recognition platform may include one or more controls, including but not limited to an input box, a recognition button, and the like. This is not limited in this application.

For example, the user may tap the input box, and the client of the AIGC recognition platform may display a file selection interface in response to operation behavior of the user. Then, after selecting a to-be-recognized image on the file selection interface, the user may tap the recognition button on the main interface 101. Correspondingly, the client of the AIGC recognition platform may obtain metadata of the image in response to operation behavior of the user (it should be understood that when the mobile phone A receives the image sent by the mobile phone B (or when the mobile phone receives the image sent by the smartwatch), the metadata of the image is received); and then, recognize whether the image is the AIGC based on the metadata of the image.

In a possible manner, the client of the AIGC recognition platform may recognize whether the image is the AIGC. For example, when there is one to-be-recognized image, the client of the AIGC recognition platform may locally perform recognition.

In a possible manner, a server side of the AIGC recognition platform may recognize whether the image is the AIGC. For example, when there are a plurality of to-be-recognized images, the client of the AIGC recognition platform may send the plurality of to-be-recognized images to the server side of the AIGC recognition platform, and the server side of the AIGC recognition platform recognizes the plurality of to-be-recognized images, and returns a recognition result to the client of the AIGC recognition platform.

It should be noted that, in this application, whether the client of the AIGC recognition platform recognizes whether the image is the AIGC or a server of the AIGC recognition platform recognizes whether the image is the AIGC is not limited by a quantity of to-be-recognized images.

For example, the client of the AIGC recognition platform may display the recognition result. The recognition result may include that the image is the AIGC and that the image is not the AIGC.

Refer to FIG. 1c(2). A recognition result displayed in FIG. 1c(2) is that the image is the AIGC.

Refer to FIG. c(3). A recognition result displayed in FIG. 1c(3) is that the image is not the AIGC.

It should be understood that the user may also manually view the metadata of the image, and then recognize, based on the metadata of the image, whether the image is the AIGC. This is not limited in this application.

The following describes a process of generating metadata and a process of recognizing media content.

First, the process of generating metadata of media content is described.

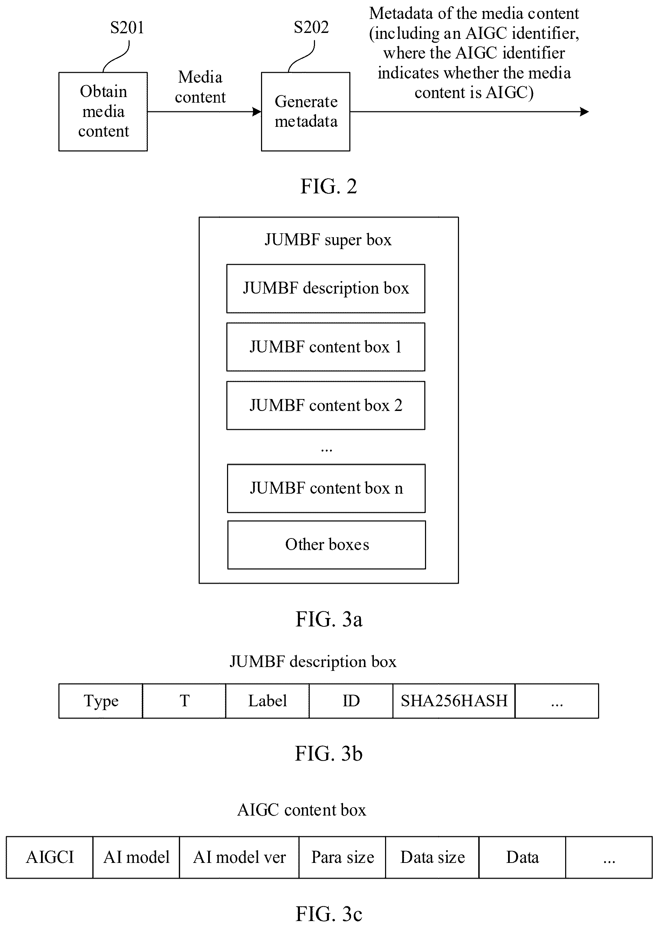

FIG. 2 is a diagram of an example of a metadata generation process.

S201: Obtain media content.

For example, the media content may include but is not limited to: an image, an audio, a video, a text, a graph, and the like. This is not limited in this application.

For example, when the media content is obtained, related information of the media content may be further obtained. The related information of the media content may be information related to the media content, and the related information of the media content may include data used to describe the media content, for example, may include information that describes a property of the media content. For example, the related information of the media content may include but is not limited to: generation time of the media content, an author name of the media content, a digital content identifier of the media content, a generation place of the media content, information about a media content generation device of the media content, resolution of the media content, a size of the media content, a media type of the media content, or a manner of generating the media content.

For example, the media type may include but is not limited to: an image type, a video type, an audio type, a graphic type, a text type, and the like.

For example, the manner of generating the media content may include an AI generation manner and a non-AI generation manner. For example, if the media content is an image, a corresponding generation manner may include but is not limited to: a photographing generation manner, a screenshot generation manner, and an AI generation manner. The photographing generation manner and the screenshot generation manner are non-AI generation manners.

For example, the media content in S201 may be media content without metadata, and the metadata of the media content may be generated based on the related information of the media content, that is, S202 is performed.

It should be noted that, the metadata generation method in this application is applied to a media asset creation (creation) phase, and corresponds to a metadata generation process in the media asset creation phase.

S202: Generate the metadata of the media content, where the metadata of the media content includes an AIGC identifier, and the AIGC identifier indicates whether the media content is AIGC.

For example, in a process of generating the metadata of the media content, when it is determined that the media content is the AIGC, a value of the AIGC identifier may be set to a preset identifier value, where the preset identifier value indicates that the media content is the AIGC. When it is determined that the media content is not the AIGC, a value of the AIGC identifier may be set to another identifier value, and the another identifier value indicates that the media content is not the AIGC. Then, the metadata of the media content is generated based on the related information of the media content and the AIGC identifier. In other words, the metadata of the media content may include the related information of the media content and the AIGC identifier.

For example, whether the media content is the AIGC may be determined based on the manner of generating the media content in the related information of the media content. When the manner of generating the media content is the AI generation manner, it may be determined that the media content is the AIGC; or when the manner of generating the media content is the non-AI generation manner, it may be determined that the media content is not the AIGC.

In this way, subsequently, whether the media content is the AIGC may be identified based on the AIGC identifier in the metadata of the media content.

The following further describes the metadata generation process by using an example in which the media content is the image and the metadata of the media content is a JUMBF (JPEG Universal Metadata Box Format, JPEG universal metadata box format) box.

First, the JUMBF box is introduced.

FIG. 3a is a diagram of an example of a structure of the JUMBF box.

Refer to FIG. 3a. For example, the JUMBF box is a super box (JUMBF Super Box). The JUMBF super box needs to include a JUMBF description box (JUMBF Description Box), n (n is a positive integer) JUMBF content boxes (JUMBF content box), and other boxes (Other Box (for example, a padding box (Padding Box), which may certainly be a box of another type)). The JUMBF description box is located before the JUMBF content box.

For example, the JUMBF description box may be used to describe the JUMBF content box; the JUMBF content box may include the related information of the media content; and the padding box may be used for data padding. Certainly, another type of box may also be defined. This is not limited in this application.

FIG. 3b is a diagram of an example of a structure of the JUMBF description box.

Refer to FIG. 3b. For example, the JUMBF description box may include a plurality of fields: a type field (a type field), a toggles (T) field (an enabling status field), a label field (a content request field), an ID field (an identity field), and an SHA256HASH field (a field used to store a sixth hash value).

It should be understood that FIG. 3b is merely an example of this application. This application may include more or fewer fields than those in FIG. 3b. This is not limited in this application.

For example, the type field (which may be referred to as a JUMBF type field, or may be referred to as a type identifier) may be used to describe a JUMBF content type (JUMBF Content Type) (that is, a type of the JUMBF content box).

For example, the type field may include one 16-byte UUID, and a value of the UUID specifies the type of the JUMBF content box.

For example, the type of the JUMBF content box may include but is not limited to: a codestream content type (image codestream content type), a UUID content type ((Universally unique identifier, universally unique identifier) content type), an XML content type ((eXtensible Markup Language, extensible markup language) content type), a JSON content type ((JavaScript Object Notation, JSON, JavaScript object notation) content type), a CBOR content type ((Concise Binary Object Representation, concise binary object notation) content type), an embedded file content type (embedded file content type), and another content type (which can be customized).

For example, the type field is a mandatory field.

For example, the toggles (T) field (which may also be referred to as the enabling state identifier) may include a binary number of 1 byte (that is, 8 bits), and may indicate a value of an option related to a JUMBF box. Each bit indicates one option. When a value of the bit is 1, it indicates that the option is enabled. When a value of the bit is 0, it indicates that the option is disabled.

For example, the label field (which may also be referred to as the content request identifier) may include a text label of a variable length, and may be used to reference or request content of the JUMBF box.

For example, the ID field (which may also be referred to as the identity) may include one unique 4-byte ID allocated by a user, and may be used to reference a JUMBF box in binary.

For example, the SHA256HASH field may be used to store the sixth hash value, and the sixth hash value is determined based on n JUMBF content boxes. For example, hash calculation may be performed on the n JUMBF content boxes after the n JUMBF content boxes are combined in a sequence of the n JUMBF content boxes in a JUMBF super box, to obtain the sixth hash value.

For example, the toggles (T) field, the label field, the ID field, and the SHA256HASH field are optional fields.

Based on the descriptions in FIG. 3a and FIG. 3b, in a possible manner, in this application, a new content type (Content Type) may be defined in the JUMBF, and may be referred to as an AIGC content type, and a corresponding JUMBF content box may be referred to as an AICG content box. In addition, for a type field in the JUMBF description box, a new identifier value (which may be referred to as a preset identifier value) may be defined. The preset identifier value may indicate that the JUMBF content box is an AICG content box (or indicate that a type of the JUMBF content box is an AIGC content type, or may be understood as indicating that the media content is the AIGC). In this case, the AIGC identifier in FIG. 2 may be the type field in the JUMBF description box.

FIG. 3c is a diagram of an example of a structure of the AICG content box.

Refer to FIG. 3c. For example, the AICG content box may include but is not limited to: an AIGCI field, an AI model (AI model) field, an AI model ver (full name: AI Model Version, AI model version) field, a para size (full name: Parameter Size, AI model parameter data amount) field, a data size (AI model training set data amount) field, and a data (load data) field.

For example, the AIGCI field (which may also be referred to as the AIGC identifier, where the AIGC identifier represented by the type field in the JUMBF description box and the AIGC identifier represented by the AIGCI field in the AICG content box are two identifiers, but the two identifiers have a same function) may indicate whether the JUMBF content box is the AICG content box. For example, two identifier values are defined for the AIGCI field: "1" and "0". "1" indicates that the JUMBF content box is the AICG content box, and "0" indicates that the JUMBF content box is not the AICG content box.

For example, the AI model field (which may also be referred to as a model identifier) may indicate a type of an AI model for generating the media content, for example, ChatGPT (a driven natural language processing tool) or Midjourney (an AI drawing tool).

For example, the AI model ver field (which may also be referred to as a model version identifier) may indicate a version of an AI model for generating the media content, for example, Midjourney V4, Midjourney V5, ChatGPT v3.5, or ChatGPT v4.

For example, the para size field (which may also be referred to as a model parameter data amount identifier) may indicate a data amount of parameters of an AI model for generating the media content, for example, 1 million parameters or 10 million parameters.

For example, the data size field (which may also be referred to as a model training set data amount identifier) may indicate a data amount of a training set of an AI model for generating the media content, for example, 1 G or 47 T.

For example, the data field may be used to store the related information of the media content.

It should be noted that, in FIG. 3c, the data field in the AICG content box is a mandatory field, and another field is an optional field.

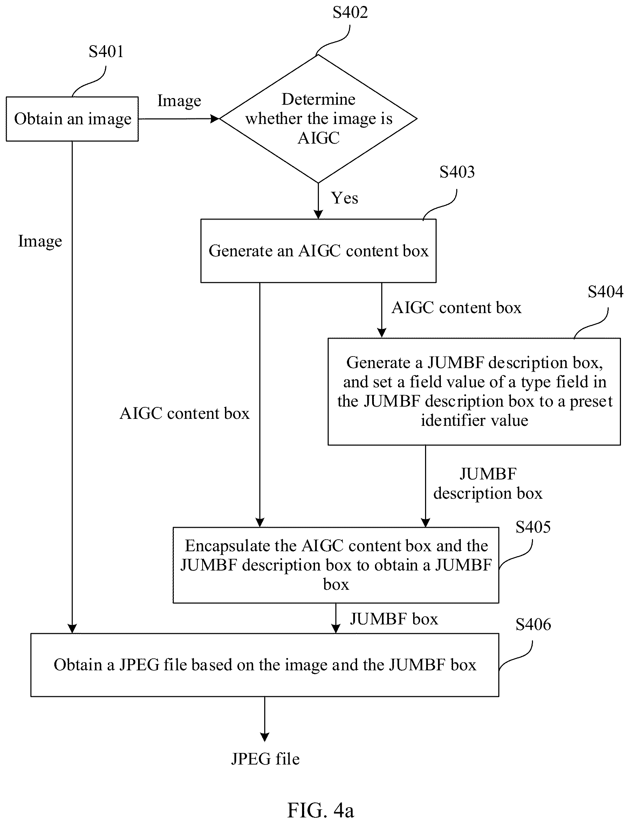

FIG. 4a is a diagram of an example of a metadata generation process. FIG. 4a is shown based on FIG. 3a to FIG. 3c.

S401: Obtain an image.

S402: Determine whether the image is AIGC.

For example, when it is determined that the image is the AIGC, S403 may be performed.

S403: Generate an AICG content box.

It is assumed that the AICG content box is shown in FIG. 3c. In this case, a field value of the AIGCI field may be set to 1. When the image is the AIGC, related information of the image may further include related information of an AI model for generating the image, for example, a type of the AI model for generating the image, a version number of the AI model for generating the image, a model parameter magnitude of the AI model for generating the image, and a data amount of a training set of the AI model for generating the image. In this way, the AI model field, the AI model ver identifier, the para size field, and the data size field may be sequentially filled based on the type of the AI model for generating the image, the version number of the AI model for generating the image, the model parameter magnitude of the AI model for generating the image, and the data amount of the training set of the AI model for generating the image. In addition, the related information of the image may be filled into the data field. In this way, the AICG content box may be obtained.

For example, there may be one AICG content box. In this case, a data field in the AICG content box may include all information in the related information of the image.

For example, there may be a plurality of AICG content boxes. In this case, a data field in each AICG content box may include a part of information in the related information of the image. The data field in each AICG content box includes different related information of the image.

It should be understood that a quantity of AICG content boxes generated in a media asset creation phase is not limited in this application.

S404: Generate a JUMBF description box, and set a field value of a type field in the JUMBF description box to a preset identifier value.

For example, the preset identifier value may be an identifier value indicating that the JUMBF content box is the AICG content box, and may be one 16-byte UUID.

For example, the field value of the type field in the JUMBF description box may be set to the preset identifier value, and another field is filled, to obtain the JUMBF description box.

S405: Encapsulate the AICG content box and the JUMBF description box to obtain a JUMBF box.

For example, the AICG content box and the JUMBF description box may be encapsulated to obtain a JUMBF super box, that is, the JUMBF box, that is, metadata of the image is obtained.

It should be understood that, before S405, other boxes may be further generated. In this case, in S405, the AICG content box, the JUMBF description box, and the other boxes may be encapsulated to obtain the JUMBF box. The other boxes may be a padding box, or may be another type of box defined with evolution of the standard. This is not limited in this application.

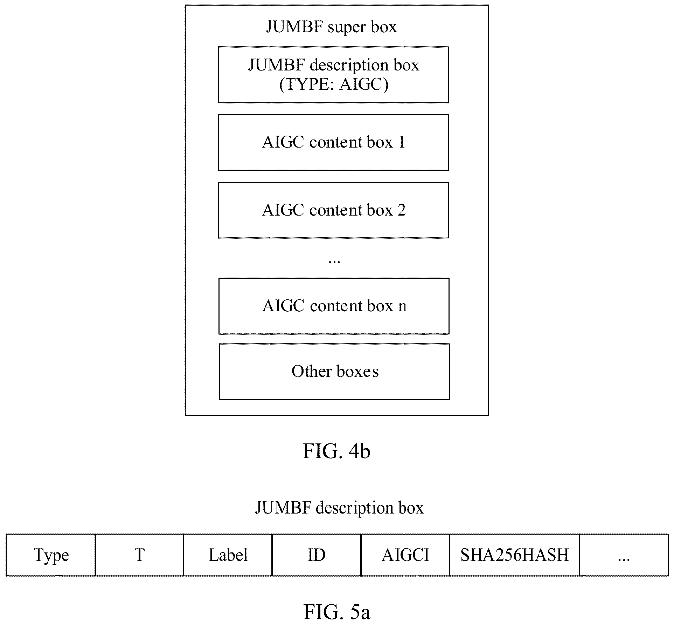

FIG. 4b is a diagram of an example of a structure of the JUMBF box.

Refer to FIG. 4b. For example, the JUMBF box of the image generated by the AI may include the JUMBF description box, n AICG content boxes (which may include a AICG content box 1, AICG content box 2, ..., and an AICG content box n), and other boxes. "TYPE: AIGC" in the JUMBF description box indicates that a content type of the JUMBF content box is an AIGC content type.

It should be noted that both the JUMBF description box and the AICG content box in the JUMBF box have an identifier (jumd). In this way, the JUMBF description box and the AICG content box may be read subsequently based on the identifier.

S406: Obtain a JPEG file based on the image and the JUMBF box.

For example, the JPEG file may be first created, where the JPEG file includes a plurality of tag segments. Then, the image and the JUMBF box can be embedded into different tag segments of the JPEG file. For example, the JUMBF box may be embedded into an APP 11 tag segment of the JPEG file.

It should be understood that, in S403, when it is determined that the image is not the AIGC, a JUMBF content box of another content type may be generated, the JUMBF description box is generated, and the field value of the type field in the JUMBF description box is set to another identifier value (indicating a content type other than the AIGC content type). Then, S405 to S406 are performed.

Based on the descriptions in FIG. 3a and FIG. 3b, in a possible manner, in this application, a field may be added to the JUMBF description box, and the field indicates whether the media content is the AIGC.

FIG. 5a is a diagram of an example of a structure of the JUMBF description box.

Refer to FIG. 5a. For example, based on FIG. 3b, an AIGCI (AIGC Identify) field is added to the JUMBF description box, and the AIGCI field may indicate whether the media content is the AIGC. The AIGCI field in the JUMBF description box may be used as the AIGC identifier in the embodiment in FIG. 2. For example, a plurality of identifier values (which may include one preset identifier value and at least one other identifier value) may be defined for the AIGCI field. For example, two identifier values "1" and "0" are defined. "1" may be a preset identifier value, indicating that the media content is the AIGC, and "0" may be another identifier value, indicating that the media content is not the AIGC.

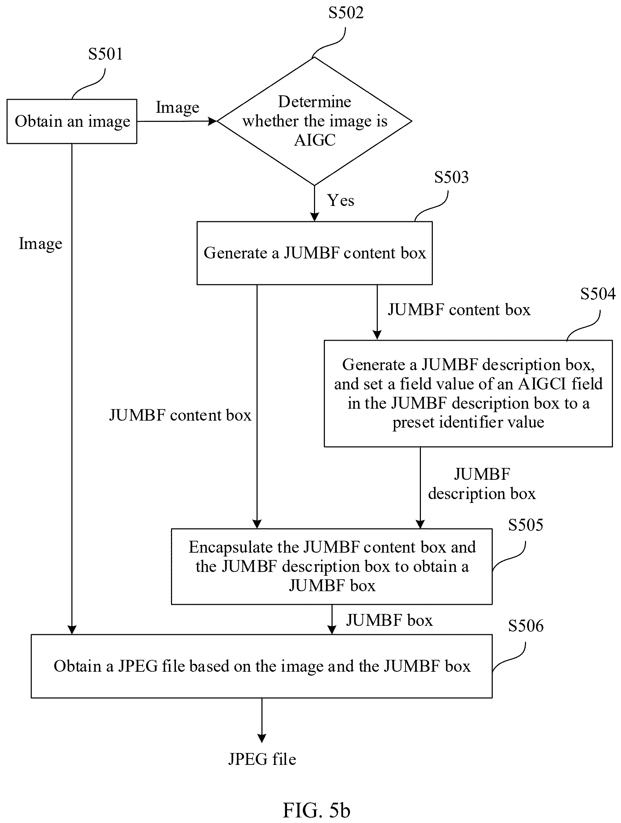

FIG. 5b is a diagram of an example of a metadata generation process. FIG. 5b is shown based on FIG. 5a.

S501: Obtain an image.

S502: Determine whether the image is AIGC.

S503: Generate a JUMBF content box.

For example, related information of the image may be encapsulated into a JUMBF content box corresponding to any one of a codestream content type, a UUID content type, an XML content type, a JSON content type, a CBOR content type, and an embedded file content type.

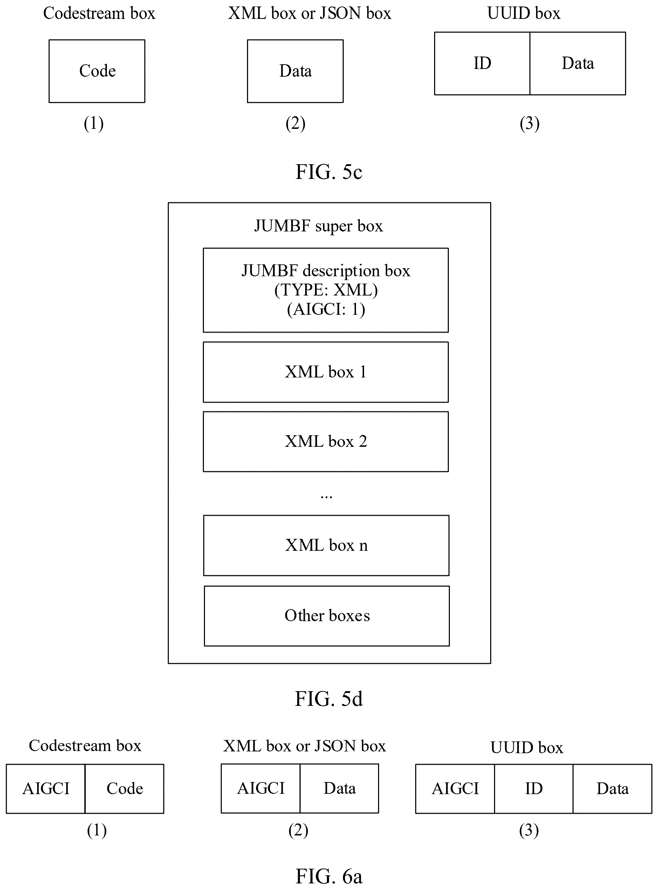

FIG. 5c is a diagram of an example of a structure of the JUMBF content box.

Refer to (1) in FIG. 5c. For example, a content type of the JUMBF content box is the codestream content type. In this case, the JUMBF content box may be referred to as a codestream box. The codestream box includes a code field, and the code field is used to store the related information of the media content. For example, the related information of the image may be encoded and then filled into the code field, to obtain the codestream box.

Refer to (2) in FIG. 5c. For example, a content type of the JUMBF content box is the XML content type or the JSON content type. In this case, the JUMBF content box may be referred to as an XML box or a JSON box. The XML box or the JSON box may include a data field, and the data field is used to store the related information of the media content. For example, the related information of the image may be represented by using XLM and then filled into the data field, to obtain the XML box. For example, the related information of the image may be represented by using a JSON and then filled into the data field, to obtain the JSON box.

Refer to (3) in FIG. 5c. For example, a content type of the JUMBF content box is the UUID content type. In this case, the JUMBF content box may be referred to as a UUID box. The UUID box may include an ID field and a data field. The ID field may include one 16-byte UUID, indicating an explanation of specific information stored in the data field. The data field is used to store the related information of the media content. For example, the related information of the image may be represented by using a UUID and then filled into the data field, and the ID field is correspondingly filled, to obtain the UUID box.

For example, there may be one JUMBF content box. In this case, a data field in the JUMBF content box may include all information in the related information of the image.

For example, there may be a plurality of JUMBF content boxes. In this case, a data field in each JUMBF content box may include a part of information in the related information of the image, and the data field in each JUMBF content box includes different related information of the image.

S504: Generate a JUMBF description box, and set a field value of an AIGCI field in the description box to a preset identifier value.

For example, in a process of generating the JUMBF description box, the field value of the AIGCI field in the JUMBF description box may be set to the preset identifier value, and another field is filled, to obtain the JUMBF description box.

It should be noted that, in the embodiment in FIG. 5b, for a type field, an identifier value of the type field may be set to another identifier value (indicating a content type other than an AIGC content type).

S505: Obtain a JUMBF box based on a JUMBF content box and a JUMBF description box.

S506: Obtain a JPEG file based on the image and the JUMBF box.

For example, for S505 and S506, refer to the foregoing descriptions of S405 and S406. Details are not described herein again.

FIG. 5d is a diagram of an example of a structure of the JUMBF box.

Refer to FIG. 5d. For example, the JUMBF box of the image generated by the AI may include the JUMBF description box, n XML boxes (which may include an XML box 1, an XML box 2, ..., and an XML box n), and other boxes. "AIGCI: 1" in the JUMBF description box indicates that the image is the AIGC, and "TYPE: XML" in the JUMBF description box indicates that a content type of the JUMBF content box is an XML content type.

Based on the descriptions in FIG. 3a and FIG. 3b, in a possible manner, in this application, a field may be added to the JUMBF content box, and the field indicates whether the media content is the AIGC.

FIG. 6a is a diagram of an example of a structure of the JUMBF content box.

Refer to (1) in FIG. 6a. For example, based on (1) in FIG. 5c, an AIGCI field is added to the codestream box, and the AIGCI field may indicate whether the media content is the AIGC. The AIGCI field in the codestream box may be used as the AIGC identifier in the embodiment in FIG. 2.

Refer to (2) in FIG. 6a. For example, based on (2) in FIG. 5c, an AIGCI field is added to the XML box or the JSON box, and the AIGCI field may indicate whether the media content is the AIGC. The AIGCI field in the XML box or the JSON box may be used as the AIGC identifier in the embodiment in FIG. 2.

Refer to (3) in FIG. a. For example, based on (3) in FIG. 5c, an AIGCI field is added to the UUID box, and the AIGCI field may indicate whether the media content is the AIGC. The AIGCI field in the UUID box may be used as the AIGC identifier in the embodiment in FIG. 2.

For example, a plurality of identifier values (which may include one preset identifier value and at least one other identifier value) may be defined for the AIGCI field. For example, two identifier values "1" and "0" are defined. "1" may be a preset identifier value, indicating that the media content is the AIGC, and "0" indicates that the media content is not the AIGC.

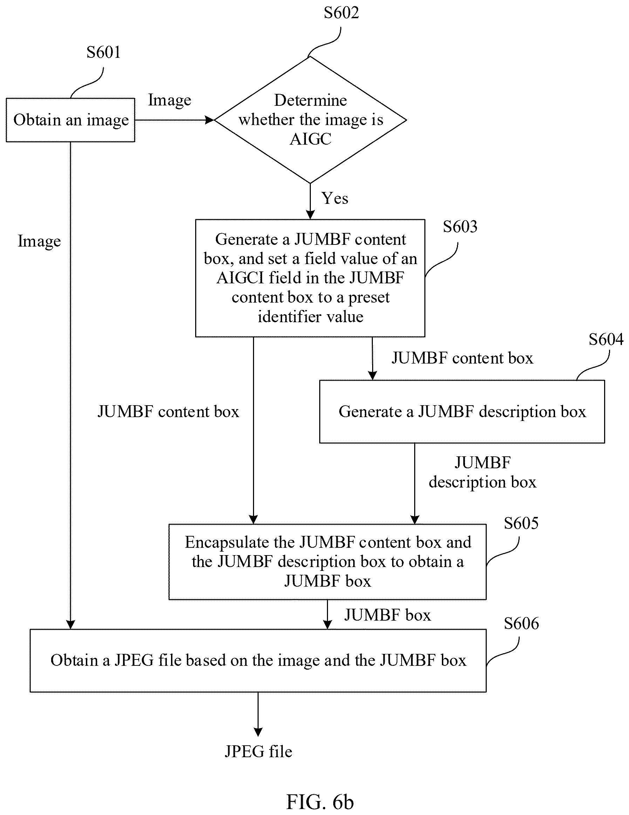

FIG. 6b is a diagram of an example of a metadata generation process. FIG. 6b is shown based on FIG. 6a.

S601: Obtain an image.

S602: Determine whether the image is AIGC.

S603: Generate a JUMBF content box, and set a field value of a AIGCI field in the JUMBF content box to a preset identifier value.

For example, as shown in (1) in FIG. 6a, related information of the image may be encoded and filled into the code field, and the field value of the AIGCI field is set to the preset identifier value, to obtain the codestream box.

For example, as shown in (2) in FIG. 6a, related information of the image may be represented by using an XML and then filled into the data field, and the field value of the AIGCI field is set to the preset identifier value, to obtain the XML box. Alternatively, related information of the image is represented by using a JSON and then filled into the data field, and the field value of the AIGCI field is set to the preset identifier value, to obtain the JSON box.

For example, as shown in (3) in FIG. 6a, related information of the image may be represented by using a UUID and then filled into the data field, and the field value of the AIGCI field is set to the preset identifier value, to obtain the UUID box.

S604: Generate a JUMBF description box.

For example, in a process of generating the JUMBF description box, the field value of the type field in the JUMBF description box may be set to another identifier value, and another field is filled, to obtain the JUMBF description box.

S605: Obtain a JUMBF box based on a JUMBF content box and a JUMBF description box.

S606: Obtain a JPEG file based on the image and the JUMBF box.

For example, for S605 and S606, refer to the foregoing descriptions of S405 and S406. Details are not described herein again.

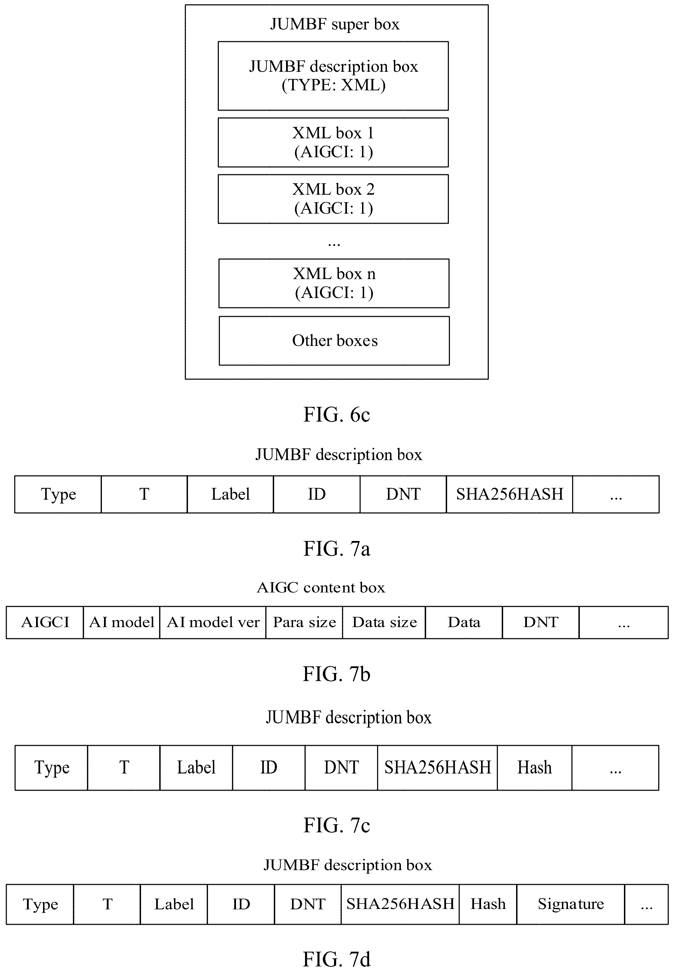

FIG. 6c is a diagram of an example of a structure of the JUMBF box.

Refer to FIG. 6c. For example, the JUMBF box of the image generated by the AI may include the JUMBF description box, XML boxes (which may include an XML box 1, an XML box 2, ..., and an XML box n), and other boxes. "TYPE: XML" in the JUMBF description box indicates that a content type of the JUMBF content box is an XML content type, and "AIGCI: 1" in the XML box indicates that the image is the AIGC.

For example, the metadata of the media content may further include a DNT (full name: Do not Train) field (which may also be referred to as a training enabling identifier), and may indicate whether the media content is allowed to be used for model training.

For example, two identifier values such as "1" and "0" may be defined for the DNT field. "1" may indicate that the media content is allowed to be used for model training, and "0" indicates that the media content is not allowed to be used for model training.

FIG. 7a is a diagram of an example of a structure of the JUMBF description box. FIG. 7a is shown based on FIG. 3b.

Refer to FIG. 7a. For example, the JUMBF description box may further include a DNT field.

FIG. 7b is a diagram of an example of a structure of the AIGC content box. FIG. 7b is shown based on FIG. 3c.

Refer to FIG. 7b. For example, the AIGC content box may further include a DNT field.

It should be understood that the DNT field is an optional field. Whether the DNT field is located in the JUMBF content box or the JUMBF description box is not limited in this application.

FIG. 7c is a diagram of an example of a structure of the JUMBF description box. FIG. 7c is shown based on FIG. 3b.

For example, the metadata of the media content may further include a first hash value. Refer to FIG. 7c. For example, a hash field may be added to the JUMBF description box, and the first hash value is located in the hash field. It should be understood that the hash field is an optional field, and the first hash value is optional information.

For example, when the JUMBF description box includes only the AIGC identifier, hash calculation may be performed on an identifier value of the AIGC identifier according to a hash algorithm, to obtain the first hash value.

For example, when the JUMBF description box includes the AIGC identifier and at least one of the toggles (T) field, the label field, the ID field, the SHA256HASH field, and the DNT field, calculation may be performed, according to a hash algorithm, on a combined result obtained by combining the identifier value of the AIGC identifier and a field value of at least one of the toggles (T) field, the label field, the ID field, the SHA256HASH field, and the DNT field, to obtain the first hash value. It should be understood that the hash algorithm used to calculate the first hash value is not limited in this application. This can prevent a field value of a field in the JUMBF description box from being tampered with.

FIG. 7d is a diagram of an example of a structure of the JUMBF description box. FIG. 7d is shown based on FIG. 7c.

For example, the metadata of the media content may further include a digital signature of the first hash value. Refer to FIG. 7d. For example, a signature field may be added to the JUMBF description box, and the digital signature of the first hash value is located in the signature field. Specifically, the digital signature may be performed on the first hash value according to a digital signature algorithm by using a private key, to obtain the digital signature of the first hash value. It should be understood that the digital signature algorithm used to calculate the digital signature of the first hash value is not limited in this application. This can prevent a field in the JUMBF description box from being forged.

It should be understood that the signature field is an optional field, and the digital signature of the first hash value is optional information.

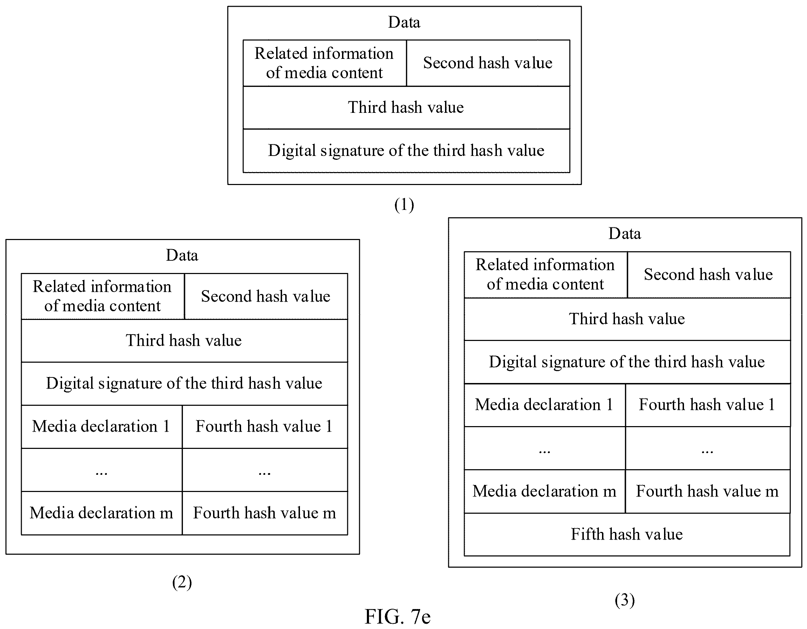

FIG. 7e is a diagram of an example of a structure of the data field in the JUMBF content box.

For example, the metadata of the media content may further include a second hash value, a third hash value, and a digital signature of the third hash value. Refer to (1) in FIG. e. For example, the second hash value, the third hash value, and the digital signature of the third hash value may be located in the data field in the JUMBF content box.

For example, the second hash value is a hash value of the media content. Specifically, hash calculation may be performed on the media content according to a hash algorithm to obtain the second hash value. It should be understood that the hash algorithm used to calculate the second hash value is not limited in this application.

For example, the third hash value is determined based on the related information of the media content and the second hash value. Specifically, the related information of the media content and the second hash value may be combined (which may also be referred to as combined or cascaded); and hash calculation is performed, according to a hash algorithm, on combined related information of the media content and second hash value, to obtain the third hash value. It should be understood that the hash algorithm used to calculate the third hash value is not limited in this application.

For example, the digital signature may be performed on the third hash value according to a digital signature algorithm by using a private key, to obtain the digital signature of the third hash value. It should be understood that the digital signature algorithm used to calculate the digital signature of the third hash value is not limited in this application.

For example, the metadata of the media content may further include one or more media declarations and one or more fourth hash values. Refer to (2) in FIG. 7e. For example, m (m is a positive integer) media declarations and m fourth hash values may be located in the data field in the JUMBF content box.

For example, the media declaration is a declaration for the media content. The media declaration may include copyright information, a thumbnail, whether the media declaration can be modified, operation permission, usage permission, a source of the media content, and the like. This is not limited in this application.

For example, the fourth hash value is a hash value of the media declaration. This can prevent the media declaration from being tampered with. Specifically, hash calculation may be performed on the media declaration according to a hash algorithm, to obtain the fourth hash value, where one media declaration corresponds to one fourth hash value. It should be understood that the hash algorithm used to calculate the fourth hash value is not limited in this application.

For example, the metadata of the media content may further include a fifth hash value. Refer to (3) in FIG. 7e. For example, the fifth hash value may be located in the data field in the JUMBF content box.

For example, the fifth hash value may be determined based on the second hash value, the third hash value, the digital signature of the third hash value, and the one or more fourth hash values.

For example, hash calculation may be performed on a combined result obtained by combining one or more of the second hash value, the third hash value, the digital signature of the third hash value, and the one or more fourth hash values, to obtain an intermediate hash value.

When the intermediate hash value is obtained by performing hash calculation by combining all of the second hash value, the third hash value, the digital signature of the third hash value, and the fourth hash value, the intermediate hash value may be used as the fifth hash value.

When the intermediate hash value is obtained by performing hash calculation by combining a part of the second hash value, the third hash value, the digital signature of the third hash value, and the one or more fourth hash values, hash calculation may be performed based on the intermediate hash value and the other part of the second hash value, the third hash value, the digital signature of the third hash value, and the one or more fourth hash values, to obtain the fifth hash value.

For example, hash calculation may be performed on the second hash value, the third hash value, the digital signature of the third hash value, and the one or more fourth hash values by using a hash tree, to obtain the fifth hash value. The hash tree is a data structure, and the hash tree may include but is not limited to a binary tree, a triple tree, a Merkel tree (Merkle Tree), and the like. This is not limited in this application.

In a possible manner, the fifth hash value is a value of a root node of the hash tree, and the second hash value, the third hash value, the digital signature of the third hash value, and the one or more fourth hash values are values of leaf nodes of the hash tree.

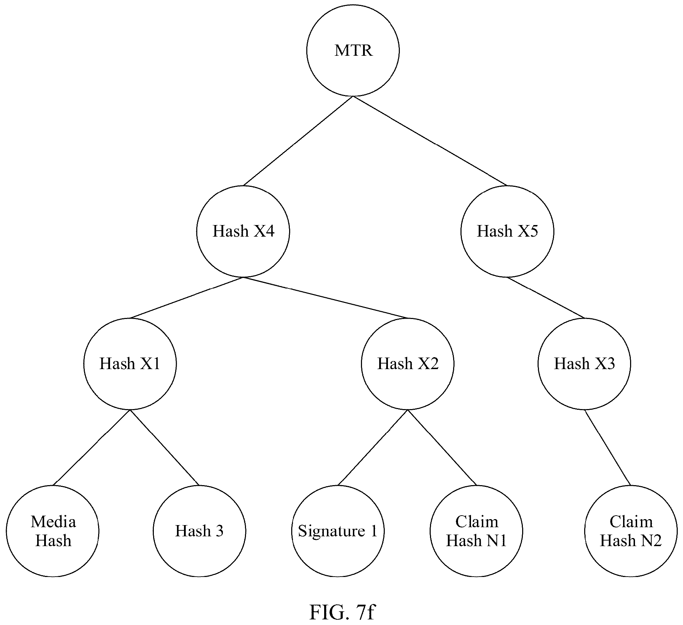

FIG. 7f is a diagram of an example of a fifth hash value generation process.

In FIG. 7f, the hash tree is a Merkle tree, and the fifth hash value is a value of a root node of the Merkle tree (Merkle Tree Root, MTR), and may be represented by using the MTR. The second hash value (Media Hash), the third hash value (Hash 3), the digital signature (Signature 1) of the third hash value, and two fourth hash values (Claim Hash N1 and Claim Hash N2) are values of leaf nodes of the Merkle tree.

Refer to FIG. 7f. For example, hash calculation may be performed on combined Media Hash and Hash 3 to obtain Hash X1 (that is, an intermediate hash value), hash calculation may be performed on combined Signature 1 and Claim Hash N1 to obtain Hash X2 (that is, an intermediate hash value), and hash calculation may be performed on Claim Hash N2 to obtain Hash X3 (that is, an intermediate hash value). Then, hash calculation is performed on combined Hash X1 and Hash X2 to obtain Hash X4; and hash calculation is performed on Hash X3 to obtain Hash X5. Then, hash calculation is performed on combined Hash X4 and Hash X5 to obtain the MTR.

It should be understood that FIG. 7f is merely an example of the Merkle tree. The Merkle tree in this application may be another data structure. This is not limited in this application.

It should be understood that a specific leaf node that is of the Merkle tree and that corresponds to the second hash value, the third hash value, the digital signature of the third hash value, and the one or more fourth hash values is not limited in this application.

In a possible manner, the fifth hash value is a value of a root node of the hash tree, the third hash value is a value of a root node of a left subtree of the hash tree, and the second hash value, the digital signature of the third hash value, and the one or more fourth hash values are values of leaf nodes of a right subtree of the hash tree.

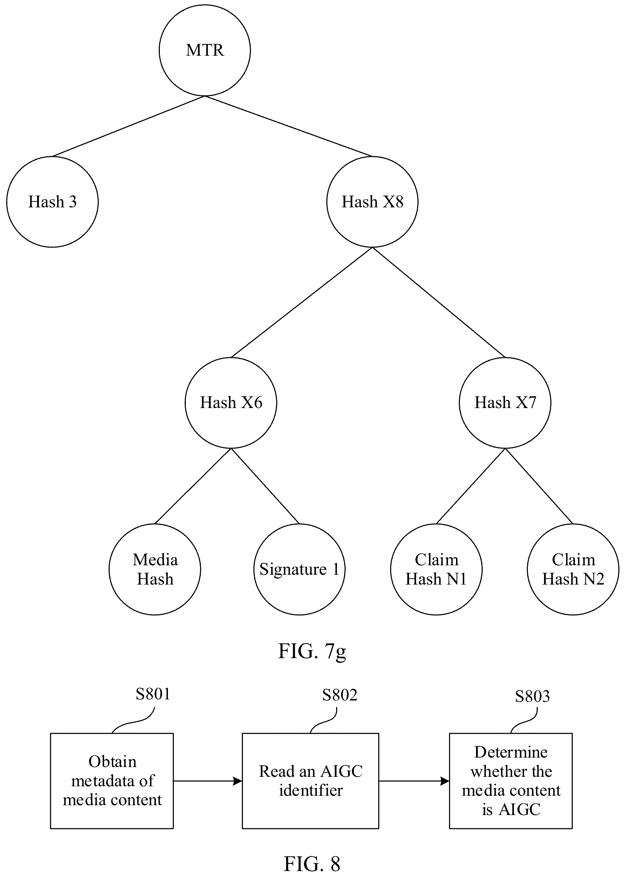

FIG. 7g is a diagram of an example of a fifth hash value generation process.

In FIG. 7g, the hash tree is a Merkle tree, and the fifth hash value is a value of a root node of the Merkle tree, and may be represented by using the MTR. The third hash value (Hash 3) is a value of a root node of a left subtree of the Merkle tree, and the second hash value (Media Hash), the digital signature (Signature 1) of the third hash value, and two fourth hash values (Claim Hash N1 and Claim Hash N2) are values of leaf nodes of a right subtree of the Merkle tree.

Refer to FIG. 7g. For example, hash calculation may be performed on combined Media Hash and Signature 1 to obtain HASH X6 (that is, an intermediate hash value), and hash calculation may be performed on combined Claim Hash N1 and Claim Hash N2 to obtain Hash X7 (that is, an intermediate hash value). Then, hash calculation is performed on combined Hash X6 and Hash X7 to obtain Hash X8. Then, hash calculation is performed on combined Hash X8 and Hash 3 to obtain the MTR.

It should be understood that a specific leaf node that is of the right subtree of the Merkle tree and that corresponds to the second hash value, the digital signature of the third hash value, and the one or more fourth hash values is not limited in this application.

Next, the process of recognizing the media content is described.

FIG. 8 is a diagram of an example of a recognition process. The embodiment in FIG. 8 is a recognition process corresponding to the metadata generation process in the embodiment in FIG. 2.

S801: Obtain metadata of media content, where the metadata of the media content includes an AIGC identifier.

For example, it can be learned from the description in the foregoing embodiment that, the metadata of the media content includes the AIGC identifier that can indicate whether the media content is AIGC. Further, for any media content in an electronic device (which may be media content included in a media asset generated by the electronic device, or may be media content included in a media asset received by the electronic device from another electronic device), when whether the media content is AIGC needs to be recognized, metadata of the media content may be obtained. Then, whether the media content is the AIGC is recognized based on the metadata of the media content.

S802: Read the AIGC identifier from the metadata of the media content.

S803: Determine, based on the AIGC identifier, whether the media content is the AIGC.

For example, the AIGC identifier may be determined from the metadata of the media content; then a value of the AIGC identifier is read; and then, whether the media content is the AIGC is determined based on the value of the AIGC identifier.

For example, when the value of the AIGC identifier is a preset identifier value, it is determined that the media content is the AIGC. When the value of the AIGC identifier is another identifier value, it is determined that the media content is not the AIGC.

The following further describes the process of recognizing the media content by using an example in which the media content is an image and the metadata is a JUMBF box.

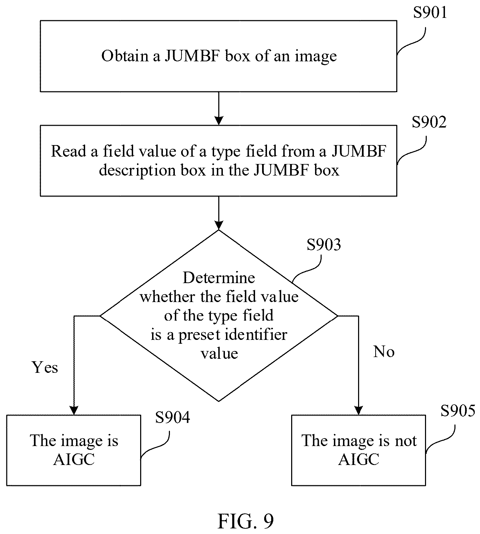

For example, in the embodiment in FIG. 4a, the JUMBF description box includes a type field. When the type field is the AIGC identifier, for a corresponding process of recognizing whether an image is AIGC, refer to the description in the embodiment in FIG. 9.

FIG. 9 is a diagram of an example of a recognition process. The embodiment in FIG. 9 is a recognition process corresponding to the metadata generation process in the embodiment in FIG. 4a.

S901: Obtain a JUMBF box of an image, where a JUMBF description box in the JUMBF box includes an AIGC identifier.

For example, based on the description of the embodiment in FIG. 4a, it can be learned that a type field in the JUMBF description box in the JUMBF box of the image is the AIGC identifier. Further, when whether an image is AIGC needs to be determined, a JUMBF box of the image may be obtained.

For example, the JUMBF box may be read from an APP 11 tag segment of a JPEG file. Specifically, after a 1^{st} identifier (jumd) is read from the APP 11 tag segment of the JPEG file, data may continue to be read until a 2^{nd} identifier (jumd) is read. In this case, it is determined that a 1^{st} JUMBF box has been read. After the 2^{nd} identifier (jumd) is read from the APP 11 tag segment of the JPEG file, data may continue to be read until a 3^{rd} identifier (jumd) is read. In this case, it determined that a 2^{nd} JUMBF box has been read. The rest may be deduced by analogy.

S902: Read a field value of the type field from the JUMBF description box in the JUMBF box.

For example, each time one JUMBF box is read, data in the JUMBF box may be read. Specifically, after a 1^{st} identifier (jumd) is read from the JUMBF box, data continues to be read until a 2^{nd} identifier (jumd) is read. In this case, it may be determined that the JUMBF description box in the JUMBF box has been read. Then, the field value of the type field in the JUMBF description box is read to obtain a value of the AIGC identifier.

S903: Determine whether the field value of the type field is a preset identifier value.

Then, whether the field value of the type field is the preset identifier value may be determined, that is, whether the value of the AIGC identifier is the preset identifier value is determined.

For example, when the field value of the type field is the preset identifier value, it may be determined that the image is the AIGC. In this case, reading a next JUMBF box from the APP 11 tag field may be stopped.

For example, when the field value of the type field is not the preset identifier value, reading a next JUMBF box from the APP 11 tag field may be continued, and then S902 and S903 are performed. When field values of type fields included in JUMBF description boxes in all JUMBF boxes in the APP 11 tag field are not the preset identifier value, it may be determined that the image is not the AIGC.

S904: When the value of the AIGC identifier is the preset identifier value, determine that the image is the AIGC.

S905: When the value of the AIGC identifier is not the preset identifier value, determine that the image is not the AIGC.

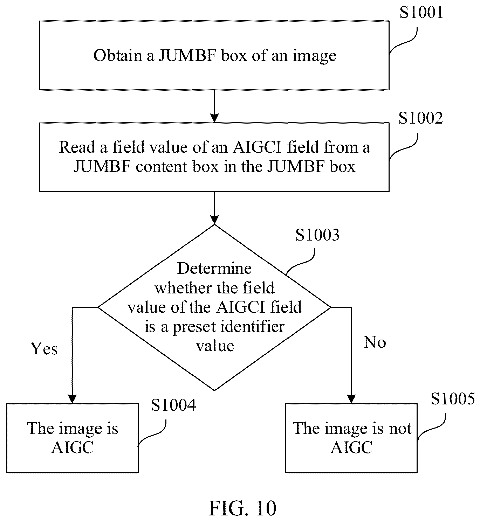

For example, in embodiments in FIG. 4a and FIG. 6b, the JUMBF content box includes an AIGCI field. When the AIGCI field is the AIGC identifier, for a corresponding process of recognizing whether an image is AIGC, refer to the description in the embodiment in FIG. 10.

FIG. 10 is a diagram of an example of a recognition process. The embodiment in FIG. 10 is a recognition process corresponding to the metadata generation processes in embodiments in FIG. 4a and FIG. 6b.

S1001: Obtain a JUMBF box of an image, where a JUMBF content box in the JUMBF box includes an AIGCI field.

For example, based on the descriptions of embodiments in FIG. 4a and FIG. 6b, it can be learned that, when the JUMBF content box in the JUMBF box of the image includes an AIGCI field, if whether an image is AIGC needs to be determined, a JUMBF box of the image may be obtained. For a specific process of reading the JUMBF box of the image, refer to the description of S901. Details are not described herein again.

S1002: Read a field value of the AIGCI field from the JUMBF content box in the JUMBF box.

For example, each time one JUMBF box is read, data in the JUMBF box may be read. Specifically, after a 2^{nd} identifier (jumd) is read from the JUMBF box, data continues to be read until a 3^{rd} identifier (jumd) is read. In this case, it is determined that a 1^{st} JUMBF content box in the JUMBF box has been read. After the 2^{nd} identifier (jumd) is read, data continues to be read until the 3^{rd} identifier (jumd) is read. In this case, it may be determined that a 2^{nd} JUMBF content box in the JUMBF box has been read. The rest may be deduced by analogy.

After each JUMBF content box is read, the field value of the AIGCI field in the AIGCI field in the JUMBF content box may be read, and then S1003 is performed.

S1003: Determine whether the field value of the AIGCI field is a preset identifier value.

For example, when the field value of the AIGCI field is the preset identifier value, it may be determined that the image is the AIGC. In this case, reading a next JUMBF content box from the JUMBF box may be stopped, and reading a next JUMBF box from the APP 11 tag field may be stopped.

For example, when the field value of the AIGCI field is not the preset identifier value, a next JUMBF content box may be read from the JUMBF box, and then S1002 and S1003 are performed. When field values of AIGCI fields included in all JUMBF content boxes in the JUMBF box are not the preset identifier value, a next JUMBF box may be read from the APP 11 tag field. When field values of AIGCI fields included in all JUMBF content boxes in all JUMBF boxes in the APP 11 tag field are not the preset identifier value, it may be determined that the image is not the AIGC.

S1004: When the field value of the AIGCI field is the preset identifier value, determine that the image is the AIGC.

S1005: When the field value of the AIGCI field is not the preset identifier value, determine that the image is not the AIGC.

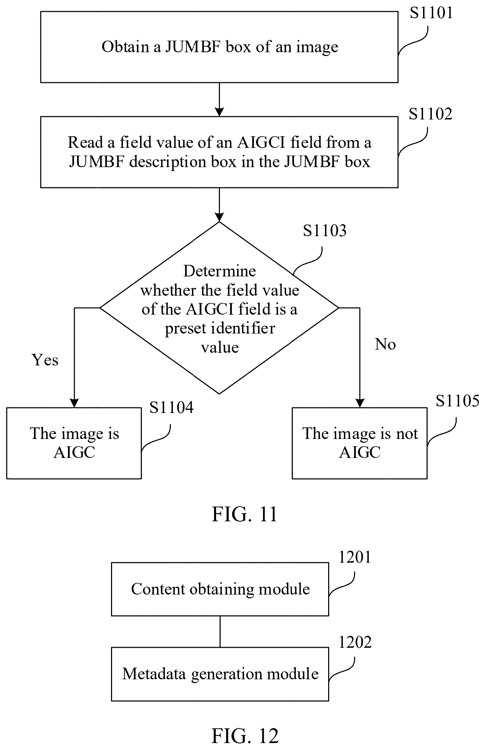

For example, in the embodiment in FIG. 5b, the JUMBF description box includes an AIGCI field. When the AIGCI field is the AIGC identifier, for a process of recognizing whether an image is an AIGC, refer to the description in the embodiment in FIG. 11.

FIG. 11 is a diagram of an example of a recognition process. The embodiment in FIG. 11 is a recognition process corresponding to the metadata generation process in the embodiment in FIG. 5b.

S1101: Obtain a JUMBF box of an image, where a JUMBF description box in the JUMBF box includes an AIGC identifier.

S1102: Read a field value of the AIGC field from the JUMBF description box in the JUMBF box.

For example, for S1001 and S1002, refer to the foregoing descriptions of S801 and S802. Details are not described herein again.

It should be noted that, after the JUMBF description box is read in S1102, the field value of the AIGCI field in the JUMBF description box may be read to obtain a value of the AIGC identifier.

S1103: Determine whether the field value of the AIGC field is a preset identifier value.

S1104: When the field value of the AIGC field is the preset identifier value, determine that the image is AIGC.

S1105: When the field value of the AIGC field is not the preset identifier value, determine that the image is not AIGC.

In addition, when media content needs to be used for AI model training, a field value of a DNT field may be read from metadata of the media content, and then whether the media content is allowed to be used for training an AI model is determined based on the field value of the DNT field. When it is determined, based on the field value of the DNT field, that the media content is allowed to be used for training the AI model, the media content may be used as a training sample in a training set of the AI model. When it is determined, based on the field value of the DNT field, that the media content is not allowed to be used for training the AI model, the media content does not need to be added to a training set of the AI model. For a specific manner of reading the field value of the DNT field, refer to the description of the manner of reading the value of the AIGC identifier in embodiments in FIG. 8 to FIG. 11. Details are not described herein again.

FIG. 12 is a diagram of an example of a metadata generation apparatus. The metadata generation apparatus may be configured to perform the method in the foregoing embodiments. Therefore, for beneficial effect that can be achieved by the metadata generation apparatus, refer to beneficial effect in the corresponding method provided above. Details are not described herein again.

Refer to FIG. 12. For example, the metadata generation apparatus may include:
a content obtaining module 1201, configured to obtain media content; and
a metadata generation module 1202, configured to generate metadata of the media content, where the metadata of the media content includes an artificial intelligence generated content AIGC identifier, and the AIGC identifier indicates whether the media content is AIGC.

For example, the metadata generation module 1202 is further configured to obtain, based on the media content and the metadata of the media content, a media asset corresponding to the media content.

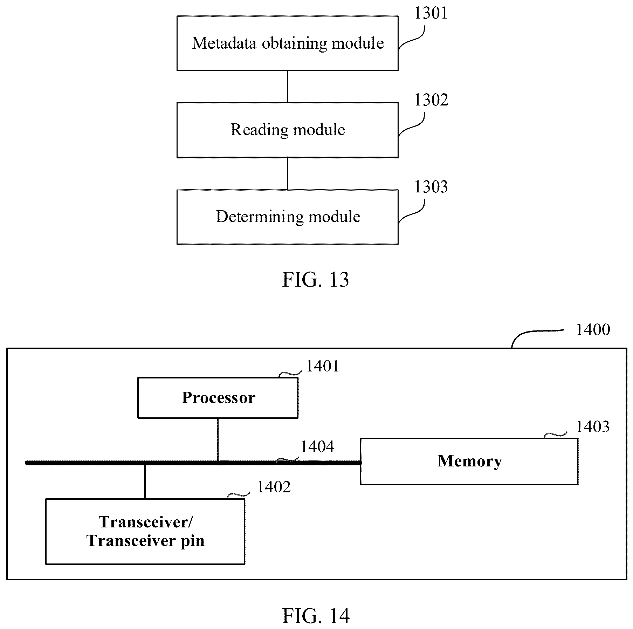

FIG. 13 is a diagram of an example of a recognition apparatus. The metadata generation apparatus may be configured to perform the method in the foregoing embodiments. Therefore, for beneficial effect that can be achieved by the metadata generation apparatus, refer to beneficial effect in the corresponding method provided above. Details are not described herein again.

Refer to FIG. 13. For example, the recognition apparatus may include:
a metadata obtaining module 1301, configured to obtain metadata of media content;
a reading module 1302, configured to read an AIGC identifier from the metadata of the media content; and
a determining module 1303, configured to determine, based on the AIGC identifier, whether the media content is AIGC.

In an example, FIG. 14 is a block diagram of an apparatus 1400 according to an embodiment of this application. The apparatus 1400 may include a processor 1401 and a transceiver/transceiver pin 1402, and optionally further includes a memory 1403.

Components of the apparatus 1400 are coupled together through a bus 1404. In addition to a data bus, the bus 1404 further includes a power bus, a control bus, and a status signal bus. However, for clear description, various types of buses in the figure are referred to as the bus 1404.

Optionally, the memory 1403 may be configured to store instructions in the foregoing method embodiments. The processor 1401 may be configured to: execute the instructions in the memory 1403, control a receiving pin to receive a signal, and control a sending pin to send a signal.

The apparatus 1400 may be the electronic device or a chip of the electronic device in the foregoing method embodiments.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data via the one or more interface circuits. When the one or more processors execute computer instructions, steps in the foregoing embodiments are performed. The interface circuit is a transceiver/transceiver pin 1402.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions. When the computer instructions are executed by a computer or a processor, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effect that can be achieved, refer to beneficial effect in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented according to requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical elements, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A metadata generation method, wherein the method comprises:
obtaining media content; and
generating metadata of the media content, wherein the metadata of the media content comprises an artificial intelligence generated content AIGC identifier, and the AIGC identifier indicates whether the media content is AIGC.

2. The method according to claim 1, wherein
the metadata of the media content further comprises a first hash value, wherein the first hash value is a hash value of data that comprises the AIGC identifier.

3. The method according to claim 2, wherein
the metadata of the media content further comprises a digital signature of the first hash value.

4. The method according to any one of claims 1 to 3, wherein
the metadata of the media content further comprises a training enabling identifier, and the training enabling identifier indicates whether the media content is allowed to be used for model training.

5. The method according to any one of claims 1 to 4, wherein
the metadata of the media content further comprises at least one of the following: a model identifier, a model version identifier, a model parameter data amount identifier, or a model training set data amount identifier.

6. The method according to any one of claims 1 to 5, wherein the metadata of the media content further comprises related information of the media content.

7. The method according to claim 6, wherein
the metadata of the media content further comprises: a second hash value, a third hash value, and a digital signature of the third hash value, wherein the second hash value is a hash value of the media content, and the third hash value is a hash value of data that comprises the related information of the media content and the second hash value.

8. The method according to claim 7, wherein
the metadata of the media content further comprises one or more media declarations and one or more fourth hash values, wherein the media declaration is a declaration for the media content, and the fourth hash value is a hash value of the media declaration.

9. The method according to claim 8, wherein
the metadata of the media content further comprises a fifth hash value, wherein the fifth hash value is a hash value of data that comprises the second hash value, the third hash value, the digital signature of the third hash value, and the one or more fourth hash values.

10. The method according to any one of claims 1 to 9, wherein the method further comprises:
obtaining, based on the media content and the metadata of the media content, a media asset corresponding to the media content.

11. The method according to any one of claims 1 to 10, wherein the metadata of the media content is a JPEG universal metadata box format JUMBF box, the JUMBF box comprises a JUMBF description box and a JUMBF content box, and the JUMBF description box and/or the JUMBF content box comprise/comprises the AIGC identifier.

12. The method according to claim 11, wherein the JUMBF content box further comprises the related information of the media content.

13. The method according to claim 12, wherein the JUMBF content box further comprises at least one of the following: the model identifier, the model version identifier, the model parameter data amount identifier, or the model training set data amount identifier.

14. The method according to claim 12 or 13, wherein
the related information of the media content comprises at least one of the following: generation time of the media content, an author name of the media content, a digital content identifier of the media content, a generation place of the media content, information about a media content generation device of the media content, resolution of the media content, or a size of the media content.

15. The method according to any one of claims 12 to 14, wherein the JUMBF description box further comprises the first hash value, an enabling state identifier, a content request identifier, an identity, and a sixth hash value; and
the sixth hash value is determined based on the JUMBF content box, and the first hash value is a hash value of data that comprises the AIGC identifier, the enabling state identifier, the content request identifier, the identity, and the sixth hash value.

16. A recognition method, wherein the method comprises:
obtaining metadata of media content;
reading an artificial intelligence generated content AIGC identifier from the metadata of the media content; and
determining, based on the AIGC identifier, whether the media content is AIGC.

17. The method according to claim 16, wherein the method further comprises:
when a value of the AIGC identifier is a preset identifier value, determining that the media content is the AIGC.

18. The method according to claim 16 or 17, wherein the metadata of the media content is a JPEG universal metadata box format JUMBF box, the JUMBF box comprises a JUMBF description box and a JUMBF content box, and the JUMBF description box and/or the JUMBF content box comprise/comprises the AIGC identifier.

19. A metadata generation apparatus, wherein the apparatus comprises:
a content obtaining module, configured to obtain media content; and
a metadata generation module, configured to generate metadata of the media content, wherein the metadata of the media content comprises an artificial intelligence generated content AIGC identifier, and the AIGC identifier indicates whether the media content is AIGC.

20. A recognition apparatus, wherein the apparatus comprises:
a metadata obtaining module, configured to obtain metadata of media content;
a reading module, configured to read an artificial intelligence generated content AIGC identifier from the metadata of the media content; and
a determining module, configured to determine, based on the AIGC identifier, whether the media content is AIGC.

21. An electronic device, comprising:
a memory and a processor, wherein the memory is coupled to the processor; and
the memory stores program instructions, and when the program instructions are executed by the processor, the electronic device is enabled to perform the metadata generation method according to any one of claims 1 to 15.

22. An electronic device, comprising:
a memory and a processor, wherein the memory is coupled to the processor; and
the memory stores program instructions, and when the program instructions are executed by the processor, the electronic device is enabled to perform the recognition method according to any one of claims 16 to 18.

23. A chip, comprising one or more interface circuits and one or more processors, wherein the one or more processors receive or send data via the one or more interface circuits, and when the one or more processors execute computer instructions, steps of the method according to any one of claims 1 to 18 are performed.

24. A computer-readable storage medium, wherein the computer-readable storage medium stores a computer program, and when the computer program is run on a computer or a processor, the computer or the processor is enabled to perform the method according to any one of claims 1 to 18.

25. A computer program product, wherein the computer program product comprises computer instructions, and when the computer instructions are executed by a computer or a processor, steps of the method according to any one of claims 1 to 18 are performed.
